# EUROPEAN PATENT APPLICATION

(11) **EP 4 580 296 A1**
(43) Date of publication of application: **02.07.2025**
(21) Application number: 23845448.2
(22) Date of filing: 21.07.2023
(51) Int. Cl.: H04W 74/08

(54) **METHOD AND APPARATUS FOR COMMUNICATION NODE USED IN WIRELESS COMMUNICATION**

(30) Priority: 26.07.2022 CN 202210881093
(71) Applicant: SHANGHAI LANGBO COMMUNICATION TECHNOLOGY COMPANY LIMITED, Shanghai 200240 (CN)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2023/108574
(87) International publication number: WO 2024/022238

(57) **Abstract**

The present application discloses a method and apparatus for a communication node used in wireless communication. A communication node sends at least two Preambles over K1 time-frequency resources, wherein K1 is a positive integer greater than 1; a first counter is updated according to K1; the Preambles are sent over K2 time-frequency resources by using a first target power value, wherein K2 is a positive integer; any two of the K1 time-frequency resources do not overlap in a time domain; any two of the K2 time-frequency resources do not overlap in the time domain, and the K2 time-frequency resources follow the K1 time-frequency resources; the Preambles sent over the K1 time-frequency resources and the Preambles sent over the K2 time-frequency resources relate to a first random access process; any two of the at least two Preambles are within a time interval during which the K1 time-frequency resources are sent, and the first counter is not updated; the first target power value is related to the product of the first counter and a first step size.

## Description

### Technical Field

This application relates to a transmission method and apparatus in a wireless communication system, and in particular, to a transmission method and apparatus for random access.

### Related Art

Coverage is one of key factors considered by an operator during commercialization of a cellular communication network because the coverage directly affects service quality, capital expenditures (CAPEX), and operating expenses (OPEX). In most scenarios of actual deployment, uplink (UL) performance may be a bottleneck. However, in some emerging vertical cases, for example, video uploading, uplink traffic is quite large. In a "new radio (NR) coverage enhancement" work item (WI) of Rel-17, NR coverage of a physical uplink shared channel (PUSCH), a physical uplink control channel (PUCCH), and a message 3 (Msg3) is extended and enhanced. However, coverage of a physical random access channel (PRACH) has not been improved. Because PRACH transmission is quite important in many processes such as initial access and beam failure recovery, a "further NR coverage enhancement" work item is established in Rel-18, to further enhance uplink coverage of the PRACH.

### SUMMARY

To increase a success probability of random access, when a preamble is sent again after a preamble is sent once, an increment of a transmit power of a preamble is determined based on a counter and a power step. For PRACH enhancement in Rel-18, a feasible manner is PRACH repetition. When user equipment repeatedly sends preambles through a PRACH, an existing mechanism for determining an increment of preamble transmit cannot meet a requirement of repeatedly sending preambles through the PRACH, and it is difficult to ensure random access performance. Therefore, when a preamble is repeatedly sent again through the PRACH after a preamble is repeatedly sent through the PRACH once, how to determine whether an increment of a transmit power needs to be enhanced, and in particular, how to update a counter or how to determine a power step need to be considered.

In view of the foregoing problem, this application provides a solution for random access. In descriptions of the foregoing problem, an NR system is used as an example. This application is also applicable to, for example, a scenario of an LTE system. Further, although this application is originally intended for a Uu air interface, this application can also be applied to a PC5 interface. Further, although this application is originally intended for a scenario of a terminal and a base station, this application is also applicable to a vehicle-to-everything (V2X) scenario and a scenario of communication between a terminal and a relay and between the relay and a base station, to achieve technical effect similar to that in the scenario of a terminal and a base station. Further, although this application is originally intended for a scenario of a terminal and a base station, this application is also applicable to an integrated access and backhaul (IAB) communication scenario, to achieve technical effect similar to that in the scenario of a terminal and a base station. Further, although this application is originally intended for a terrestrial network (TN) scenario, this application is also applicable to a non-terrestrial network (NTN) communication scenario, to achieve technical effect similar to that in the TN scenario. In addition, using a unified solution in different scenarios further helps reduce hardware complexity and costs.

In an embodiment, for explanations of terminology in this application, refer to definitions in TS36 series standard protocols of the 3GPP.

In an embodiment, for explanations of terminology in this application, refer to definitions in TS38 series standard protocols of the 3GPP.

In an embodiment, for explanations of terminology in this application, refer to definitions in TS37 series standard protocols of the 3GPP.

In an embodiment, for explanations of terminology in this application, refer to definitions in standard protocols of the Institute of Electrical and Electronics Engineers (IEEE).

It should be noted that embodiments of any node in this application and features in the embodiments may be applied to any other node in a case that no conflict occurs, and embodiments of this application and features in the embodiments may be combined with each other in any manner in a case that no conflict occurs.

This application discloses a method for a first node used in wireless communication. The method includes:
sending at least two preambles on K1 time-frequency resources, K1 being a positive integer greater than 1; updating a first counter based on K1; and sending a preamble on K2 time-frequency resources by using a first target power value, K2 being a positive integer;
where at least two of the K1 time-frequency resources do not overlap in time domain, at least two of the K2 time-frequency resources do not overlap in time domain, the K2 time-frequency resources are after the K1 time-frequency resources, the preambles sent on the K1 time-frequency resources and the preamble sent on the K2 time-frequency resources belong to a first random access procedure, the first counter is not updated within a time interval between transmissions of any two of the at least two preambles on the K1 time-frequency resources, and the first target power value is related to a product of the first counter and a first step.

In an embodiment, that "at least two of the K1 time-frequency resources do not overlap in time domain" includes: any two of the K1 time-frequency resources do not overlap in time domain.

In an embodiment, that "at least two of the K2 time-frequency resources do not overlap in time domain" includes: any two of the K2 time-frequency resources do not overlap in time domain.

In an embodiment, a problem to be resolved in this application includes: how to improve random access performance after the at least two preambles are sent on the K1 time-frequency resources.

In an embodiment, a problem to be resolved in this application includes: how to optimize a transmit power of a random access preamble after the at least two preambles are sent on the K1 time-frequency resources.

In an embodiment, a problem to be resolved in this application includes: how to determine the first target power value after the at least two preambles are sent on the K1 time-frequency resources.

In an embodiment, a problem to be resolved in this application includes: how to update the first counter after the at least two preambles are sent on the K1 time-frequency resources.

In an embodiment, a problem to be resolved in this application includes: how to determine the first step after the at least two preambles are sent on the K1 time-frequency resources.

In an embodiment, a feature of the method includes: the first counter is updated based on K1.

In an embodiment, a feature of the method includes: the first counter is not updated within a time interval between transmissions of any two of the at least two preambles on the K1 time-frequency resources.

In an embodiment, a feature of the method includes: the first counter is updated only once within a time interval between the behavior of sending the at least two preambles on the K1 time-frequency resources and the behavior of sending the preamble on the K2 time-frequency resources by using the first target power value.

In an embodiment, a benefit of the method includes: protocol modifications are reduced.

In an embodiment, a benefit of the method includes: compatibility with an existing system is achieved.

In an embodiment, a benefit of the method includes: random access performance is improved.

In an embodiment, a benefit of the method includes: a transmit power of a random access preamble is optimized.

According to an aspect of this application, the behavior of updating the first counter based on K1 includes: updating the first counter based on a quantity of preambles sent on the K1 time-frequency resources.

In an embodiment, a problem to be resolved in this application includes: how to update the first counter based on K1 after the at least two preambles are sent on the K1 time-frequency resources.

In an embodiment, a feature of the method includes: a quantity of actually sent preambles is used for updating the first counter.

In an embodiment, a benefit of the method includes: unnecessary power ramping is reduced.

According to an aspect of this application, the method includes:
updating the first counter after the preamble is sent on the K2 time-frequency resources; and sending a preamble on K3 time-frequency resources by using a second target power value;
where at least two of the K3 time-frequency resources do not overlap in time domain, the K3 time-frequency resources are after the K2 time-frequency resources, the second target power value is a maximum output power of the first node, the first counter updated based on K2 reaches a first integer, and the first integer is configurable.

In an embodiment, that "at least two of the K3 time-frequency resources do not overlap in time domain" includes: any two of the K3 time-frequency resources do not overlap in time domain.

In an embodiment, a problem to be resolved in this application includes: how to increase a success probability of random access.

In an embodiment, a problem to be resolved in this application includes: how to determine the second target power value after the preamble is sent on the K2 time-frequency resources.

In an embodiment, a feature of the method includes: the first counter updated based on K2 reaching the first integer is used for determining that the second target power value is a maximum output power of the first node.

In an embodiment, a benefit of the method includes: coverage is enhanced.

In an embodiment, a benefit of the method includes: a success probability of random access is increased.

According to an aspect of this application, the first target power value is related to a first power offset, and the first power offset is related to K2.

According to an aspect of this application, the K1 time-frequency resources are associated with a first downlink reference signal (RS) resource, the K2 time-frequency resources are associated with a second downlink RS resource, and the first downlink RS resource is different from the second downlink RS resource.

In an embodiment, a problem to be resolved in this application includes: how to increase a success probability of random access.

In an embodiment, a feature of the method includes: the first counter is updated when the first downlink RS resource is different from the second downlink RS resource.

In an embodiment, a benefit of the method includes: coverage is enhanced.

In an embodiment, a benefit of the method includes: a success probability of random access is increased.

According to an aspect of this application, the method includes:
receiving first signaling, the first signaling indicating the first step.

According to an aspect of this application, the method includes:
receiving first signaling, the first signaling indicating a candidate step;
where the first step is related to the candidate step, and the first step is related to at least one of K1 or K2.

According to an aspect of this application, the method includes:
updating a second counter based on K1 after the behavior of sending the at least two preambles on the K1 time-frequency resources;
where the second counter is used for counting a quantity of times of sending a preamble.

This application discloses a method for a second node used in wireless communication. The method includes:
receiving a preamble sent on K1 time-frequency resources, or receiving a preamble sent on K2 time-frequency resources;
where a first counter is updated based on K1, K1 is a positive integer greater than 1, K2 is a positive integer, at least two preambles are sent on the K1 time-frequency resources, the preamble is sent on the K2 time-frequency resources by using a first target power value, at least two of the K1 time-frequency resources do not overlap in time domain, at least two of the K2 time-frequency resources do not overlap in time domain, the K2 time-frequency resources are after the K1 time-frequency resources, the preambles sent on the K1 time-frequency resources and the preamble sent on the K2 time-frequency resources belong to a first random access procedure, the first counter is not updated within a time interval between transmissions of any two of the at least two preambles on the K1 time-frequency resources, and the first target power value is related to a product of the first counter and a first step.

In an embodiment, that "at least two of the K1 time-frequency resources do not overlap in time domain" includes: any two of the K1 time-frequency resources do not overlap in time domain.

In an embodiment, that "at least two of the K2 time-frequency resources do not overlap in time domain" includes: any two of the K2 time-frequency resources do not overlap in time domain.

According to an aspect of this application, the phrase that the first counter is updated based on K1 includes: the first counter is updated based on a quantity of preambles sent on the K1 time-frequency resources.

According to an aspect of this application, the method includes:
receiving a preamble sent on K3 time-frequency resources;
where the first counter is updated after the preamble is sent on the K2 time-frequency resources, the preamble is sent on the K3 time-frequency resources by using a second target power value, at least two of the K3 time-frequency resources do not overlap in time domain, the K3 time-frequency resources are after the K2 time-frequency resources, the second target power value is a maximum output power of a transmitter of the at least two preambles, the first counter updated based on K2 reaches a first integer, and the first integer is configurable.

In an embodiment, that "at least two of the K3 time-frequency resources do not overlap in time domain" includes: any two of the K3 time-frequency resources do not overlap in time domain.

According to an aspect of this application, the first target power value is related to a first power offset, and the first power offset is related to K2.

According to an aspect of this application, the K1 time-frequency resources are associated with a first downlink RS resource, the K2 time-frequency resources are associated with a second downlink RS resource, and the first downlink RS resource is different from the second downlink RS resource.

According to an aspect of this application, the method includes:
sending first signaling, the first signaling indicating the first step.

According to an aspect of this application, the method includes:
sending first signaling, the first signaling indicating a candidate step;
where the first step is related to the candidate step, and the first step is related to at least one of K1 or K2.

According to an aspect of this application, a second counter is updated based on K1 after the at least two preambles are sent on the K1 time-frequency resources, and the second counter is used for counting a quantity of times of sending a preamble.

This application discloses a first node used in wireless communication. The first node includes:
a first transmitter, configured to: send at least two preambles on K1 time-frequency resources, K1 being a positive integer greater than 1; update a first counter based on K1; and send a preamble on K2 time-frequency resources by using a first target power value, K2 being a positive integer;
where at least two of the K1 time-frequency resources do not overlap in time domain, at least two of the K2 time-frequency resources do not overlap in time domain, the K2 time-frequency resources are after the K1 time-frequency resources, the preambles sent on the K1 time-frequency resources and the preamble sent on the K2 time-frequency resources belong to a first random access procedure, the first counter is not updated within a time interval between transmissions of any two of the at least two preambles on the K1 time-frequency resources, and the first target power value is related to a product of the first counter and a first step.

In an embodiment, that "at least two of the K1 time-frequency resources do not overlap in time domain" includes: any two of the K1 time-frequency resources do not overlap in time domain.

In an embodiment, that "at least two of the K2 time-frequency resources do not overlap in time domain" includes: any two of the K2 time-frequency resources do not overlap in time domain.

This application discloses a second node used in wireless communication. The second node includes:
a second receiver, configured to receive a preamble sent on K1 time-frequency resources, or receive a preamble sent on K2 time-frequency resources;
where a first counter is updated based on K1, K1 is a positive integer greater than 1, K2 is a positive integer, at least two preambles are sent on the K1 time-frequency resources, the preamble is sent on the K2 time-frequency resources by using a first target power value, at least two of the K1 time-frequency resources do not overlap in time domain, at least two of the K2 time-frequency resources do not overlap in time domain, the K2 time-frequency resources are after the K1 time-frequency resources, the preambles sent on the K1 time-frequency resources and the preamble sent on the K2 time-frequency resources belong to a first random access procedure, the first counter is not updated within a time interval between transmissions of any two of the at least two preambles on the K1 time-frequency resources, and the first target power value is related to a product of the first counter and a first step.

In an embodiment, that "at least two of the K1 time-frequency resources do not overlap in time domain" includes: any two of the K1 time-frequency resources do not overlap in time domain.

In an embodiment, that "at least two of the K2 time-frequency resources do not overlap in time domain" includes: any two of the K2 time-frequency resources do not overlap in time domain.

This application further discloses a method for a first node used in wireless communication. The method includes:
sending at least two preambles on K1 time-frequency resources, K1 being a positive integer greater than 1; increasing the first counter by 1 after the behavior of sending the at least two preambles on the K1 time-frequency resources; and sending a preamble on K2 time-frequency resources by using a first target power value, K2 being a positive integer;
where at least two of the K1 time-frequency resources do not overlap in time domain, at least two of the K2 time-frequency resources do not overlap in time domain, the K2 time-frequency resources are after the K1 time-frequency resources, the preambles sent on the K1 time-frequency resources and the preamble sent on the K2 time-frequency resources belong to a first random access procedure, the first counter is not updated within a time interval between transmissions of any two of the at least two preambles on the K1 time-frequency resources, the first target power value is related to a product of the first counter and a first step, and the first step is related to at least one of K1 or K2.

This application further discloses a first node used in wireless communication. The first node includes:
a first transmitter, configured to: send at least two preambles on K1 time-frequency resources, K1 being a positive integer greater than 1; increase the first counter by 1 after the behavior of sending the at least two preambles on the K1 time-frequency resources; and send a preamble on K2 time-frequency resources by using a first target power value, K2 being a positive integer;
where at least two of the K1 time-frequency resources do not overlap in time domain, at least two of the K2 time-frequency resources do not overlap in time domain, the K2 time-frequency resources are after the K1 time-frequency resources, the preambles sent on the K1 time-frequency resources and the preamble sent on the K2 time-frequency resources belong to a first random access procedure, the first counter is not updated within a time interval between transmissions of any two of the at least two preambles on the K1 time-frequency resources, the first target power value is related to a product of the first counter and a first step, and the first step is related to at least one of K1 or K2.

This application further discloses a method for a first node used in wireless communication. The method includes:
sending at least two preambles on K1 time-frequency resources, K1 being a positive integer greater than 1; after the behavior of sending the at least two preambles on the K1 time-frequency resources, updating a second counter based on K1, and updating a first counter; and sending a preamble on K2 time-frequency resources by using a first target power value, K2 being a positive integer;
where at least two of the K1 time-frequency resources do not overlap in time domain, at least two of the K2 time-frequency resources do not overlap in time domain, the K2 time-frequency resources are after the K1 time-frequency resources, the preambles sent on the K1 time-frequency resources and the preamble sent on the K2 time-frequency resources belong to a first random access procedure, the first counter is not updated within a time interval between transmissions of any two of the at least two preambles on the K1 time-frequency resources, the first target power value is related to a product of the first counter and a first step, and the second counter is used for counting a quantity of times of sending a preamble.

In an embodiment, the updating a first counter includes: increasing the first counter by 1.

In an embodiment, the updating a first counter includes: updating the first counter based on K1.

This application further discloses a first node used in wireless communication. The first node includes:
a first transmitter, configured to: send at least two preambles on K1 time-frequency resources, K1 being a positive integer greater than 1; after the behavior of sending the at least two preambles on the K1 time-frequency resources, update a second counter based on K1, and update a first counter; and send a preamble on K2 time-frequency resources by using a first target power value, K2 being a positive integer;
where at least two of the K1 time-frequency resources do not overlap in time domain, at least two of the K2 time-frequency resources do not overlap in time domain, the K2 time-frequency resources are after the K1 time-frequency resources, the preambles sent on the K1 time-frequency resources and the preamble sent on the K2 time-frequency resources belong to a first random access procedure, the first counter is not updated within a time interval between transmissions of any two of the at least two preambles on the K1 time-frequency resources, the first target power value is related to a product of the first counter and a first step, and the second counter is used for counting a quantity of times of sending a preamble.

In an embodiment, the updating a first counter includes: increasing the first counter by 1.

In an embodiment, the updating a first counter includes: updating the first counter based on K1.

In an embodiment, compared with a conventional solution, this application has the following advantages:
- . Protocol modifications are reduced;
- . Compatibility with an existing system is achieved;
- . Random access performance is improved;
- . A transmit power of a random access preamble is optimized;
- . Unnecessary power ramping is reduced;
- . Coverage is enhanced;
- . A success probability of random access is increased.

### BRIEF DESCRIPTION OF THE DRAWINGS

Other features, objectives, and advantages of this application are to become clearer through reading of detailed descriptions of non-restrictive embodiments with reference to the following accompanying drawings:
FIG. 1 is a flowchart of preamble transmission according to an embodiment of this application;
FIG. 2 is a schematic diagram of a network architecture according to an embodiment of this application;
FIG. 3 is a schematic diagram of an embodiment of a radio protocol architecture of a user plane and a control plane according to an embodiment of this application;
FIG. 4 is a schematic diagram of a first communication device and a second communication device according to an embodiment of this application;
FIG. 5 is a flowchart of radio signal transmission according to an embodiment of this application;
FIG. 6 is a flowchart of radio signal transmission according to another embodiment of this application;
FIG. 7 is a flowchart of radio signal transmission according to still another embodiment of this application;
FIG. 8 is a schematic diagram of updating a first counter based on a quantity of preambles sent on K1 time-frequency resources according to an embodiment of this application;
FIG. 9 is a schematic diagram showing that a first target power value is related to a first power offset according to an embodiment of this application;
FIG. 10 is a schematic diagram showing that K1 time-frequency resources and K2 time-frequency resources are respectively associated with a first downlink RS resource and a second downlink RS resource according to an embodiment of this application;
FIG. 11 is a schematic diagram of a time-frequency resource set according to an embodiment of this application;
FIG. 12 is a block diagram of a structure of a processing apparatus used in a first node according to an embodiment of this application; and
FIG. 13 is a block diagram of a structure of a processing apparatus used in a second node according to an embodiment of this application.

### DETAILED DESCRIPTION

The following further describes the technical solutions of this application in detail with reference to the accompanying drawings. It should be noted that embodiments of this application and features in the embodiments may be combined with each other in any manner in a case that no conflict occurs.

### Embodiment 1

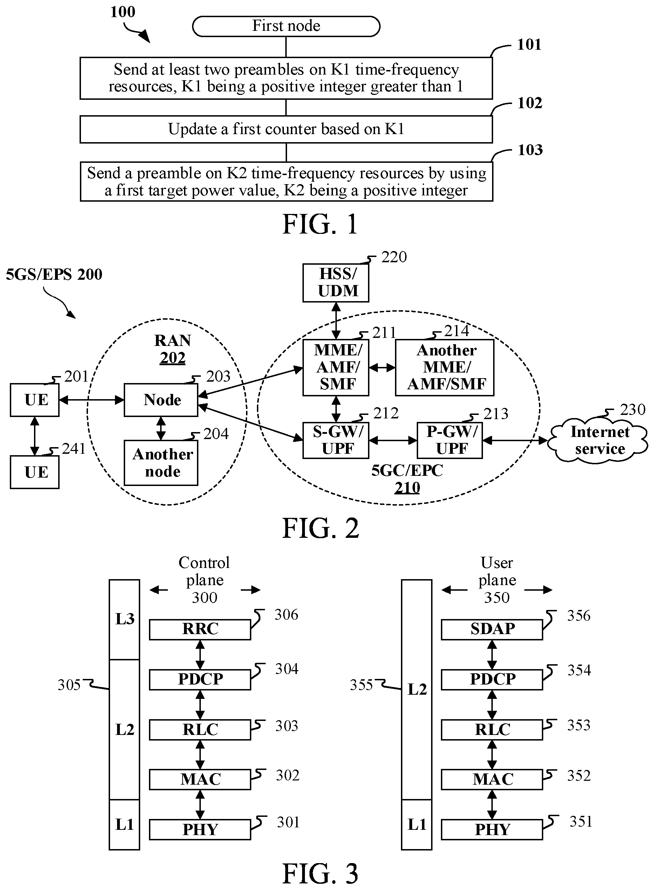

Embodiment 1 exemplarily shows a flowchart of preamble transmission according to an embodiment of this application, as shown in FIG. 1. In FIG. 1, each block indicates a step. It should be particularly emphasized that a sequence of blocks in the figure does not represent a chronological order of indicated steps.

In Embodiment 1, a first node in this application performs the following operations: in step 101, sending at least two preambles on K1 time-frequency resources, K1 being a positive integer greater than 1; in step 102, updating a first counter based on K1; and in step 103, sending a preamble on K2 time-frequency resources by using a first target power value, K2 being a positive integer, where at least two of the K1 time-frequency resources do not overlap in time domain, at least two of the K2 time-frequency resources do not overlap in time domain, the K2 time-frequency resources are after the K1 time-frequency resources, the preambles sent on the K1 time-frequency resources and the preamble sent on the K2 time-frequency resources belong to a first random access procedure, the first counter is not updated within a time interval between transmissions of any two of the at least two preambles on the K1 time-frequency resources, and the first target power value is related to a product of the first counter and a first step.

In an embodiment, a preamble being sent on the K1 time-frequency resources is used for determining to monitor, in an ra-ResponseWindow, a physical downlink control channel (PDCCH) scrambled by a radio network temporary identifier (RA-RNTI).

In an embodiment, a start moment of the ra-ResponseWindow is related to an end moment of one of the K1 time-frequency resources.

In an embodiment, a start moment of the ra-ResponseWindow is related to an end moment of the last one of the K1 time-frequency resources.

In an embodiment, the RA-RNTI is related to at least one of the K1 time-frequency resources.

In an embodiment, the RA-RNTI is related to each of the K1 time-frequency resources.

In an embodiment, the RA-RNTI is related to the 1^{st} one of the K1 time-frequency resources.

In an embodiment, each time-frequency resource in this application is used for sending a preamble.

In an embodiment, each time-frequency resource in this application includes a time domain resource and a frequency domain resource.

In an embodiment, a duration of each time-frequency resource in this application includes at least one symbol.

In an embodiment, each time-frequency resource in this application includes at least one symbol in time domain.

In an embodiment, each time-frequency resource in this application is a PRACH occasion in time domain.

In an embodiment, each time-frequency resource in this application is an uplink carrier in frequency domain.

In an embodiment, a frequency domain resource occupied by each time-frequency resource in this application is an uplink carrier.

In a sub-embodiment of this embodiment, the uplink carrier is a normal uplink (NUL) carrier.

In a sub-embodiment of this embodiment, the uplink carrier is a supplementary uplink (SUL) carrier.

In an embodiment, a frequency domain resource occupied by each time-frequency resource in this application includes a center frequency.

In an embodiment, a frequency domain resource occupied by each time-frequency resource in this application includes a frequency and a bandwidth.

In an embodiment, a time domain location of a time-frequency resource in this application includes a start moment of the time-frequency resource.

In an embodiment, a time domain location of a time-frequency resource in this application includes an end moment of the time-frequency resource.

In an embodiment, a time domain location of a time-frequency resource in this application includes a start moment and an end moment of the time-frequency resource.

In an embodiment, a time domain location of a time-frequency resource in this application includes a start moment and a duration of the time-frequency resource.

In an embodiment, a time domain location of a time-frequency resource in this application is a PRACH occasion.

In an embodiment, a start moment of a time-frequency resource in this application is a start moment of transmission of a preamble.

In an embodiment, a start moment of a time-frequency resource in this application is the 1^{st} symbol used for sending a preamble on the time-frequency resource.

In an embodiment, a start moment of a time-frequency resource in this application is the 1^{st} slot used for sending a preamble on the time-frequency resource.

In an embodiment, a start moment of a time-frequency resource in this application is a start moment of a PRACH repetition.

In an embodiment, an end moment of a time-frequency resource in this application is an end moment of transmission of a preamble.

In an embodiment, an end moment of a time-frequency resource in this application is the last symbol used for sending a preamble on each time-frequency resource.

In an embodiment, an end moment of a time-frequency resource in this application is the last slot used for sending a preamble on each time-frequency resource.

In an embodiment, an end moment of a time-frequency resource in this application is an end moment of a PRACH repetition.

In an embodiment, a duration of a time-frequency resource in this application in time domain is a time interval between a start moment of the time-frequency resource and an end moment of the time-frequency resource in time domain.

In an embodiment, a duration of a time-frequency resource in this application in time domain includes at least one symbol.

In an embodiment, a duration of a time-frequency resource in this application in time domain includes at least one slot.

In an embodiment, a downlink RS resource in this application is a synchronization signal block (SSB).

In an embodiment, a downlink RS resource in this application is a channel state information (CSI)-RS.

In an embodiment, a downlink RS resource in this application is any one of an SSB or a CSI-RS.

In an embodiment, each preamble in the first random access procedure is a random access preamble.

In an embodiment, each preamble in the first random access procedure is a sequence.

In an embodiment, each preamble in the first random access procedure is a ZC sequence.

In an embodiment, each preamble in the first random access procedure is identified by an ra-PreambleIndex.

In an embodiment, each preamble in the first random access procedure is specific to a message 1 (Msg1).

In an embodiment, each preamble in the first random access procedure indicates coverage enhancement.

In a sub-embodiment of this embodiment, each preamble in the first random access procedure is dedicated for coverage enhancement.

In a sub-embodiment of this embodiment, each preamble in the first random access procedure is dedicated for NR coverage enhancement.

In an embodiment, each preamble in the first random access procedure does not indicate coverage enhancement.

In an embodiment, the first random access procedure is a contention based random access (CBRA) procedure.

In an embodiment, the first random access procedure is performed in a first cell.

In a sub-embodiment of this embodiment, the first cell is a special cell (SpCell).

In a sub-embodiment of this embodiment, the first cell is a primary cell (PCell).

In a sub-embodiment of this embodiment, the first cell is a primary secondary cell group (SCG) cell (PSCell).

In an embodiment, all time-frequency resources in the first random access procedure belong to a same uplink carrier in frequency domain.

In an embodiment, the 1^{st} preamble sent on the K1 time-frequency resources is the 1^{st} preamble sent in the first random access procedure.

In an embodiment, the 1^{st} preamble sent on the K1 time-frequency resources is any preamble sent in the first random access procedure.

In an embodiment, the 1^{st} preamble sent on the K1 time-frequency resources is not the 1^{st} preamble sent in the first random access procedure.

In an embodiment, the last preamble sent on the K2 time-frequency resources is the last preamble sent in the first random access procedure.

In an embodiment, the last preamble sent on the K2 time-frequency resources is not the last preamble sent in the first random access procedure.

In an embodiment, for each preamble sent on the K1 time-frequency resources, the first node does not receive a listen before talk (LBT) failure indication from a lower layer.

In an embodiment, the first node does not receive a notification of suspending a power ramping counter from a lower layer.

In an embodiment, after the behavior of sending the at least two preambles on the K1 time-frequency resources, the second counter in this application is increased by 1.

In an embodiment, after the behavior of sending the at least two preambles on the K1 time-frequency resources, the second counter in this application is updated based on K1.

In an embodiment, the first counter in this application includes a value of the first counter.

In an embodiment, the first counter in this application includes at least one of the first counter or a value of the first counter.

In an embodiment, the second counter in this application includes a value of the second counter.

In an embodiment, the second counter in this application includes at least one of the second counter or a value of the second counter.

In an embodiment, K1 is determined at least before the 1^{st} preamble is sent on the K1 time-frequency resources.

In an embodiment, K1 is determined based on at least channel quality.

In an embodiment, K1 is determined based on at least channel quality and at least one offset.

In an embodiment, K1 is determined based on at least a reference signal received power (RSRP).

In an embodiment, K1 is determined based on at least an RSRP measurement result and an RSRP threshold.

In an embodiment, K1 is determined based on at least an RSRP measurement result, at least one offset, and an RSRP threshold.

In an embodiment, K1 is determined based on a random access response.

In an embodiment, K1 is determined based on at least a radio resource control (RRC) message.

In an embodiment, K1 is determined based on at least an RRC message and channel quality.

In an embodiment, K1 is related to at least channel quality.

In an embodiment, K1 is preconfigured.

In an embodiment, K1 is configurable.

In an embodiment, K1 is variable.

In an embodiment, K1 is countable.

In an embodiment, a maximum value of K1 does not exceed a positive integer.

In an embodiment, K1 is determined from Q1 candidate integers, and the Q1 candidate integers are configured by using an RRC message.

In a sub-embodiment of this embodiment, K1 is determined from the Q1 candidate integers based on at least channel quality.

In a sub-embodiment of this embodiment, K1 is determined from the Q1 candidate integers based on at least channel quality and at least one offset.

In an embodiment, the RSRP measurement result is an RSRP measurement result for at least one downlink reference signal.

In an embodiment, the RSRP measurement result is an RSRP measurement result for a downlink pathloss reference.

In an embodiment, a preamble is sent on each of the K1 time-frequency resources.

In an embodiment, a preamble is sent on at least two of the K1 time-frequency resources.

In an embodiment, a preamble is not sent on at least one of the K1 time-frequency resources.

In an embodiment, preambles sent on any two of the K1 time-frequency resources are the same.

In an embodiment, preambles sent on any two of the K1 time-frequency resources are different.

In an embodiment, a preamble sent on a time-frequency resource among the K1 time-frequency resources is selected by UE.

In an embodiment, the behavior of "updating a first counter" includes: increasing the first counter.

In an embodiment, the behavior of "updating a first counter" includes: modifying the first counter.

In an embodiment, the behavior of "updating a first counter" includes: adjusting the first counter.

In an embodiment, the behavior of "updating a first counter" includes: changing the first counter.

In an embodiment, an updated value of the first counter is not equal to a value of the first counter before the first counter is updated.

In an embodiment, the first counter is used for determining an adjustment value of a transmit power of a preamble compared with a transmit power of a previous preamble.

In an embodiment, the first counter is related to a quantity of times of sending a preamble.

In an embodiment, the first counter is related to a quantity of times of adjusting a transmit power of a preamble.

In an embodiment, the first counter is related to a quantity of times of ramping up a transmit power of a preamble.

In an embodiment, the first counter is PREAMBLE_POWER_RAMPING_COUNTER.

In an embodiment, a name of the first counter includes PREAMBLE_POWER_RAMPING_COUNTER.

In an embodiment, a name of the first counter includes at least one of PREAMBLE_POWER_RAMPING_COUNTER, CE, COVERAGE, ENHANCEMENT, or REPETITION.

In an embodiment, the "updating a first counter based on K1" includes: increasing the first counter by K1.

In an embodiment, the "updating a first counter based on K1" includes: increasing the first counter by P1, P1 being a positive integer not greater than K1.

In an embodiment, P1 is related to a quantity of preambles sent on the K1 time-frequency resources.

In an embodiment, P1 is related to a downlink RS resource associated with the K1 time-frequency resources.

In an embodiment, P1 is related to a downlink RS resource associated with the K2 time-frequency resources.

In an embodiment, P1 is related to a downlink RS resource associated with the K1 time-frequency resources, and P1 is related to a downlink RS resource associated with the K2 time-frequency resources.

In an embodiment, P1 is related to a quantity of same downlink RS resources in a downlink RS resource associated with the K1 time-frequency resources and a downlink RS resource associated with the K2 time-frequency resources.

In a sub-embodiment of this embodiment, P1 is equal to the quantity of same downlink RS resources in the downlink RS resource associated with the K1 time-frequency resources and the downlink RS resource associated with the K2 time-frequency resources.

In a sub-embodiment of this embodiment, P1 is equal to a difference between K1 and 1.

In a sub-embodiment of this embodiment, P1=K1-1.

In an embodiment, P1 is related to whether a downlink RS resource associated with the K1 time-frequency resources is the same as a downlink RS resource associated with the K2 time-frequency resources.

In a sub-embodiment of this embodiment, if the downlink RS resource associated with the K1 time-frequency resources is the same as the downlink RS resource associated with the K2 time-frequency resources, P1 is equal to K1+1.

In a sub-embodiment of this embodiment, if the downlink RS resource associated with the K1 time-frequency resources is different from the downlink RS resource associated with the K2 time-frequency resources, P1 is equal to K1.

In an embodiment, P1 is related to whether a downlink RS resource associated with the last one of the K1 time-frequency resources is the same as a downlink RS resource associated with the 1^{st} one of the K2 time-frequency resources.

In a sub-embodiment of this embodiment, if the downlink RS resource associated with the last one of the K1 time-frequency resources is the same as the downlink RS resource associated with the 1^{st} one of the K2 time-frequency resources, P1 is equal to K1+1.

In a sub-embodiment of this embodiment, if the downlink RS resource associated with the last one of the K1 time-frequency resources is different from the downlink RS resource associated with the 1^{st} one of the K2 time-frequency resources, P1 is equal to K1.

In an embodiment, P1 is related to a quantity of time-frequency resource groups, among the K1 time-frequency resources, that are associated with two different downlink RS resources, and one time-frequency resource group includes two adjacent time-frequency resources among the K1 time-frequency resources.

In a sub-embodiment of this embodiment, P1 is equal to the quantity of time-frequency resource groups, among the K1 time-frequency resources, that are associated with two different downlink RS resources.

In a sub-embodiment of this embodiment, P1 is equal to (the quantity of time-frequency resource groups, among the K1 time-frequency resources, that are associated with two different downlink RS resources+1).

In a sub-embodiment of this embodiment, P1 is related to the quantity of time-frequency resource groups, among the K1 time-frequency resources, that are associated with two different downlink RS resources, and P1 is related to whether a downlink RS resource associated with the last one of the K1 time-frequency resources is the same as a downlink RS resource associated with the 1^{st} one of the K2 time-frequency resources.

In an affiliated embodiment of this sub-embodiment, if the downlink RS resource associated with the last one of the K1 time-frequency resources is the same as the downlink RS resource associated with the 1^{st} one of the K2 time-frequency resources, P1 is equal to (the quantity of time-frequency resource groups, among the K1 time-frequency resources, that are associated with two different downlink RS resources+1).

In an affiliated embodiment of this sub-embodiment, if the downlink RS resource associated with the last one of the K1 time-frequency resources is different from the downlink RS resource associated with the 1^{st} one of the K2 time-frequency resources, P1 is equal to the quantity of time-frequency resource groups, among the K1 time-frequency resources, that are associated with two different downlink RS resources.

In an embodiment, P1 is related to whether a downlink RS resource associated with a reference time-frequency resource among the K1 time-frequency resources is the same as a downlink RS resource associated with a reference time-frequency resource among the K2 time-frequency resources.

In a sub-embodiment of this embodiment, if the downlink RS resource associated with the reference time-frequency resource among the K1 time-frequency resources is the same as the downlink RS resource associated with the reference time-frequency resource among the K2 time-frequency resources, P1 is equal to K1+1.

In a sub-embodiment of this embodiment, if the downlink RS resource associated with the reference time-frequency resource among the K1 time-frequency resources is different from the downlink RS resource associated with the reference time-frequency resource among the K2 time-frequency resources, P1 is equal to K1.

In a sub-embodiment of this embodiment, the reference time-frequency resource among the K1 time-frequency resources is the 1^{st} one of the K1 time-frequency resources, and the reference time-frequency resource among the K2 time-frequency resources is the 1^{st} one of the K2 time-frequency resources.

In a sub-embodiment of this embodiment, the reference time-frequency resource among the K1 time-frequency resources is one of the K1 time-frequency resources, and the reference time-frequency resource among the K2 time-frequency resources is one of the K2 time-frequency resources.

In a sub-embodiment of this embodiment, an RRC message is used for determining the reference time-frequency resource among the K1 time-frequency resources, and an RRC message is used for determining the reference time-frequency resource among the K2 time-frequency resources.

In an embodiment, two adjacent time-frequency resources among the K1 time-frequency resources are associated with a same downlink RS resource, and powers used for sending preambles on the two adjacent time-frequency resources are the same.

In an embodiment, two adjacent time-frequency resources among the K1 time-frequency resources are associated with a same downlink RS resource, and powers used for sending preambles on the two adjacent time-frequency resources are different.

In an embodiment, regardless of whether two adjacent time-frequency resources among the K1 time-frequency resources are associated with a same downlink RS resource or different downlink RS resources, powers used for sending preambles on the two adjacent time-frequency resources are the same.

In an embodiment, regardless of whether two adjacent time-frequency resources among the K1 time-frequency resources are associated with a same downlink RS resource or different downlink RS resources, powers used for sending preambles on the two adjacent time-frequency resources are different.

In an embodiment, whether powers used for sending preambles on two adjacent time-frequency resources among the K1 time-frequency resources are the same is related to whether the two adjacent time-frequency resources are associated with a same downlink RS resource.

In a sub-embodiment of this embodiment, if the two adjacent time-frequency resources among the K1 time-frequency resources are associated with a same downlink RS resource, powers used for sending preambles on the two adjacent time-frequency resources are different.

In a sub-embodiment of this embodiment, if the two adjacent time-frequency resources among the K1 time-frequency resources are associated with different downlink RS resources, powers used for sending preambles on the two adjacent time-frequency resources are the same.

In an embodiment, the first downlink RS resource is used for determining at least one of the K1 time-frequency resources.

In an embodiment, the first downlink RS resource is used for determining each of the K1 time-frequency resources.

In an embodiment, the first downlink RS resource is used for determining only one of the K1 time-frequency resources.

In an embodiment, the first downlink RS resource is used for determining the 1^{st} one of the K1 time-frequency resources.

In an embodiment, K1 downlink RS resources each are used for determining one of the K1 time-frequency resources, and the first downlink RS resource is one of the K1 downlink RS resources.

In an embodiment, the second downlink RS resource is used for determining at least one of the K2 time-frequency resources.

In an embodiment, the second downlink RS resource is used for determining each of the K2 time-frequency resources.

In an embodiment, the second downlink RS resource is used for determining only one of the K2 time-frequency resources.

In an embodiment, the second downlink RS resource is used for determining the 1^{st} one of the K2 time-frequency resources.

In an embodiment, K2 downlink RS resources each are used for determining one of the K2 time-frequency resources, and the second downlink RS resource is one of the K2 downlink RS resources.

In an embodiment, the K1 time-frequency resources are associated only with one downlink RS resource, the K2 time-frequency resources are associated only with one downlink RS resource, and the downlink RS resource associated with the K1 time-frequency resources is the same as the downlink RS resource associated with the K2 time-frequency resources.

In an embodiment, the K1 time-frequency resources are associated only with one downlink RS resource, the K2 time-frequency resources are associated only with one downlink RS resource, and the downlink RS resource associated with the K1 time-frequency resources is different from the downlink RS resource associated with the K2 time-frequency resources.

In an embodiment, the K1 time-frequency resources are associated with at least one downlink RS resource, and the K2 time-frequency resources are associated with at least one downlink RS resource.

In an embodiment, the K1 time-frequency resources are associated with a plurality of downlink RS resources, and the K2 time-frequency resources are associated with a plurality of downlink RS resources.

In an embodiment, a downlink RS resource associated with the K1 time-frequency resources and a downlink RS resource associated with the K2 time-frequency resources include at least one same downlink RS resource.

In an embodiment, a quantity of downlink RS resources associated with the K1 time-frequency resources is equal to a quantity of downlink RS resources associated with the K2 time-frequency resources.

In an embodiment, a quantity of downlink RS resources associated with the K1 time-frequency resources is not equal to a quantity of downlink RS resources associated with the K2 time-frequency resources.

In an embodiment, a downlink RS resource associated with the K1 time-frequency resources is different from a downlink RS resource associated with the K2 time-frequency resources.

In an embodiment, the behavior of updating the first counter based on K1 includes: updating the first counter based on a quantity of same downlink RS resources in at least one downlink RS resource associated with the K1 time-frequency resources and at least one downlink RS resource associated with the K2 time-frequency resources, where the K1 time-frequency resources are associated with the at least one downlink RS resource, and the K2 time-frequency resources are associated with the at least one downlink RS resource.

In an embodiment, when the 1^{st} preamble is sent on the K1 time-frequency resources, the first counter is equal to 1.

In an embodiment, when the 1^{st} preamble is sent on the K1 time-frequency resources, the first counter is greater than 1.

In an embodiment, the first counter updated based on K1 does not reach the first integer.

In an embodiment, the first counter is updated based on K1 only when the first counter does not reach the first integer.

In an embodiment, the first integer is configured.

In an embodiment, the first integer is not configured.

In an embodiment, the first integer is configurable.

In an embodiment, the first integer is preconfigured.

In an embodiment, the first integer is configured by using an RRC message.

In an embodiment, the first integer is not greater than preambleTransMax.

In an embodiment, the first integer is less than preambleTransMax.

In an embodiment, the "sending a preamble on K2 time-frequency resources by using a first target power value" includes: sending the preamble on the K2 time-frequency resources by using the first target power value.

In an embodiment, the "sending a preamble on K2 time-frequency resources by using a first target power value" includes: sending the preamble on the 1^{st} one of the K2 time-frequency resources by using the first target power value.

In an embodiment, the "sending a preamble on K2 time-frequency resources by using a first target power value" includes: sending the preamble on each of the K2 time-frequency resources by using the first target power value.

In an embodiment, the "sending a preamble on K2 time-frequency resources by using a first target power value" includes: sending the preamble on at least one of the K2 time-frequency resources by using the first target power value.

In an embodiment, the "sending a preamble on K2 time-frequency resources by using a first target power value" includes: sending the preamble on the 1^{st} one of the K2 time-frequency resources by using the first target power value.

In an embodiment, the "sending a preamble on K2 time-frequency resources by using a first target power value" includes: sending the preamble on each of the K2 time-frequency resources by using the first target power value.

In an embodiment, the "sending a preamble on K2 time-frequency resources by using a first target power value" includes: sending the preamble on at least one of the K2 time-frequency resources by using the first target power value.

In an embodiment, powers used for sending preambles on any two of the K2 time-frequency resources are equal.

In an embodiment, powers used for sending preambles on any two of the K2 time-frequency resources are not equal.

In an embodiment, powers used for sending preambles on at least two of the K2 time-frequency resources are equal.

In an embodiment, powers used for sending preambles on at least two of the K2 time-frequency resources are not equal.

In an embodiment, a preamble is sent on the 1^{st} one of the K2 time-frequency resources by using the first target power value; and a preamble is sent on a j^{th} one of the K2 time-frequency resources by using (the first target power value+the first step×(j-1)), j being an integer not less than 2 and not greater than K2.

In an embodiment, a preamble is sent on the 1^{st} one of the K2 time-frequency resources by using the first target power value; and whether a power for sending a preamble on a j^{th} one of the K2 time-frequency resources is the same as a power for sending a preamble on a (j-1)^{th} one of the K2 time-frequency resources is determined based on whether a downlink RS resource associated with the j^{th} one of the K2 time-frequency resources is the same as a downlink RS resource associated with the (j-1)^{th} one of the K2 time-frequency resources.

In a sub-embodiment of this embodiment, if the downlink RS resource associated with the j^{th} one of the K2 time-frequency resources is the same as the downlink RS resource associated with the (j-1)^{th} one of the K2 time-frequency resources, the power for sending the preamble on the j^{th} one of the K2 time-frequency resources is different from the power for sending the preamble on the (j-1)^{th} one of the K2 time-frequency resources.

In a sub-embodiment of this embodiment, if the downlink RS resource associated with the j^{th} one of the K2 time-frequency resources is different from the downlink RS resource associated with the (j-1)^{th} one of the K2 time-frequency resources, the power for sending the preamble on the j^{th} one of the K2 time-frequency resources is the same as the power for sending the preamble on the (j-1)^{th} one of the K2 time-frequency resources.

In an embodiment, K2 is determined at least before the 1^{st} preamble is sent on the K2 time-frequency resources.

In an embodiment, K2 is determined based on K1.

In an embodiment, K2 is determined based on at least channel quality.

In an embodiment, K2 is determined based on at least channel quality and at least one offset.

In an embodiment, K2 is determined based on at least an RSRP.

In an embodiment, K2 is determined based on at least an RSRP measurement result and an RSRP threshold.

In an embodiment, K2 is determined based on at least an RSRP measurement result, at least one offset, and an RSRP threshold.

In an embodiment, K2 is determined based on a random access response.

In an embodiment, K2 is determined based on at least a radio resource control (RRC) message.

In an embodiment, K2 is determined based on at least an RRC message and channel quality.

In an embodiment, K2 is related to at least channel quality.

In an embodiment, K2 is preconfigured.

In an embodiment, K2 is configurable.

In an embodiment, K2 is variable.

In an embodiment, K2 is countable.

In an embodiment, a maximum value of K2 does not exceed a positive integer.

In an embodiment, K2 is equal to 1.

In an embodiment, K2 is greater than 1.

In an embodiment, K2 is equal to K1.

In an embodiment, K2 is not equal to K1.

In an embodiment, K2 and K1 are independently determined.

In an embodiment, K2 is K1.

In an embodiment, K2 is determined from Q1 candidate integers, and the Q1 candidate integers are configured by using an RRC message.

In a sub-embodiment of this embodiment, K2 is determined from the Q1 candidate integers based on at least channel quality.

In a sub-embodiment of this embodiment, K2 is determined from the Q1 candidate integers based on at least channel quality and at least one offset.

In an embodiment, the 1^{st} symbol after an end moment of one of the K1 time-frequency resources is a start moment of another one of the K1 time-frequency resources.

In an embodiment, a symbol after an end moment of one of the K1 time-frequency resources is a start moment of another one of the K1 time-frequency resources.

In an embodiment, any two of the K1 time-frequency resources do not overlap in time domain.

In an embodiment, any two of the K1 time-frequency resources are discontinuous in time domain.

In an embodiment, any two of the K1 time-frequency resources are continuous in time domain.

In an embodiment, at least two of the K1 time-frequency resources do not overlap in time domain.

In an embodiment, durations of any two of the K1 time-frequency resources in time domain are equal.

In an embodiment, durations of any two of the K1 time-frequency resources in time domain are not equal.

In an embodiment, durations of at least two of the K1 time-frequency resources in time domain are equal.

In an embodiment, durations of at least two of the K1 time-frequency resources in time domain are not equal.

In an embodiment, any two of the K1 time-frequency resources overlap in frequency domain.

In an embodiment, any two of the K1 time-frequency resources do not overlap in frequency domain.

In an embodiment, at least two of the K1 time-frequency resources overlap in frequency domain.

In an embodiment, at least two of the K1 time-frequency resources do not overlap in frequency domain.

In an embodiment, any two of the K1 time-frequency resources occupy a same frequency domain resource.

In an embodiment, any two of the K1 time-frequency resources occupy different frequency domain resources.

In an embodiment, at least two of the K1 time-frequency resources occupy a same frequency domain resource.

In an embodiment, at least two of the K1 time-frequency resources occupy different frequency domain resources.

In an embodiment, the 1^{st} symbol after an end moment of one of the K2 time-frequency resources is a start moment of another one of the K2 time-frequency resources.

In an embodiment, a symbol after an end moment of one of the K2 time-frequency resources is a start moment of another one of the K2 time-frequency resources.

In an embodiment, any two of the K2 time-frequency resources do not overlap in time domain.

In an embodiment, any two of the K2 time-frequency resources are discontinuous in time domain.

In an embodiment, any two of the K2 time-frequency resources are continuous in time domain.

In an embodiment, at least two of the K2 time-frequency resources do not overlap in time domain.

In an embodiment, durations of any two of the K2 time-frequency resources in time domain are equal.

In an embodiment, durations of any two of the K2 time-frequency resources in time domain are not equal.

In an embodiment, durations of at least two of the K2 time-frequency resources in time domain are equal.

In an embodiment, durations of at least two of the K2 time-frequency resources in time domain are not equal.

In an embodiment, any two of the K2 time-frequency resources overlap in frequency domain.

In an embodiment, any two of the K2 time-frequency resources do not overlap in frequency domain.

In an embodiment, at least two of the K2 time-frequency resources overlap in frequency domain.

In an embodiment, at least two of the K2 time-frequency resources do not overlap in frequency domain.

In an embodiment, any two of the K2 time-frequency resources occupy a same frequency domain resource.

In an embodiment, any two of the K2 time-frequency resources occupy different frequency domain resources.

In an embodiment, at least two of the K2 time-frequency resources occupy a same frequency domain resource.

In an embodiment, at least two of the K2 time-frequency resources occupy different frequency domain resources.

In an embodiment, that "the K2 time-frequency resources are after the K1 time-frequency resources" includes: the 1^{st} one of the K2 time-frequency resources is after the last one of the K1 time-frequency resources.

In an embodiment, that "the K2 time-frequency resources are after the K1 time-frequency resources" includes: a start moment of the 1^{st} one of the K2 time-frequency resources is after an end moment of the last one of the K1 time-frequency resources.

In an embodiment, that "the K2 time-frequency resources are after the K1 time-frequency resources" includes: the K2 time-frequency resources are later than the K1 time-frequency resources in time domain.

In an embodiment, that "the K2 time-frequency resources are after the K1 time-frequency resources" includes: the 1^{st} one of the K2 time-frequency resources is after the 1^{st} one of the K1 time-frequency resources.

In an embodiment, within a time interval between transmission of the preambles on the K1 time-frequency resources and transmission of the preamble on the K2 time-frequency resources, the first random access procedure is not terminated, and the first random access procedure is not considered to have been successfully completed.

In an embodiment, the preambles sent on the K1 time-frequency resources and the preamble sent on the K2 time-frequency resources belong to a same random access procedure.

In an embodiment, the preambles sent on the K1 time-frequency resources and the preamble sent on the K2 time-frequency resources are specific to the first random access procedure.

In an embodiment, the first counter is not initialized within a time interval between transmission of the preambles on the K1 time-frequency resources and transmission of the preamble on the K2 time-frequency resources.

In an embodiment, the second counter is not initialized within a time interval between transmission of the preambles on the K1 time-frequency resources and transmission of the preamble on the K2 time-frequency resources.

In an embodiment, within a time interval between transmission of the preambles on the K1 time-frequency resources and transmission of the preamble on the K2 time-frequency resources, the first counter is not initialized to be used for determining that the preambles sent on the K1 time-frequency resources and the preamble sent on the K2 time-frequency resources are specific to the first random access procedure.

In an embodiment, within a time interval between transmission of the preambles on the K1 time-frequency resources and transmission of the preamble on the K2 time-frequency resources, the second counter is not initialized to be used for determining that the preambles sent on the K1 time-frequency resources and the preamble sent on the K2 time-frequency resources are specific to the first random access procedure.

In an embodiment, the first counter being not initialized means that the first counter is not set to 1.

In an embodiment, the second counter being not initialized means that the second counter is not set to 1.

In an embodiment, the first counter being not initialized means that the first counter is not set to an initial value of the first counter.

In an embodiment, the second counter being not initialized means that the second counter is not set to an initial value of the second counter.

In an embodiment, two of the K1 time-frequency resources are used for sending the any two of the at least two preambles.

In an embodiment, two of the K1 time-frequency resources are used for sending the any two of the at least two preambles.

In an embodiment, the first counter is not updated within a time interval between transmissions of any two of the at least two preambles on the K1 time-frequency resources.

In an embodiment, the time interval between transmissions of any two of the at least two preambles on the K1 time-frequency resources includes: a time interval between transmissions of preambles on any two of the K1 time-frequency resources.

In an embodiment, the time interval between transmissions of any two of the at least two preambles on the K1 time-frequency resources includes: a time interval between an end moment of the 1^{st} one of the any two preambles and a start moment of the 2^{nd} one of the any two preambles.

In an embodiment, the time interval between transmissions of any two of the at least two preambles on the K1 time-frequency resources includes: a time interval between a start moment of the 1^{st} one of the any two preambles and a start moment of the 2^{nd} one of the any two preambles.

In an embodiment, the time interval between transmissions of any two of the at least two preambles on the K1 time-frequency resources includes: a time interval between an end moment of the 1^{st} one of the any two preambles and an end moment of the 2^{nd} one of the any two preambles.

In an embodiment, the 1^{st} one of the any two preambles is earlier than the 2^{nd} one of the any two preambles in time domain.

In an embodiment, the 1^{st} one of the any two preambles is earlier than the 2^{nd} one of the any two preambles in time domain.

In an embodiment, the 1^{st} one of the any two preambles includes the 1^{st} preamble sent on the K1 time-frequency resources.

In an embodiment, the 2^{nd} one of the any two preambles includes the last preamble sent on the K1 time-frequency resources.

In an embodiment, the first counter being not updated means that the first counter remains unchanged.

In an embodiment, the first counter being not updated means that the first counter is not increased.

In an embodiment, within a time interval between transmissions of any two of the at least two preambles on the K1 time-frequency resources, the first node does not "consider that a random access response reception is not successful".

In an embodiment, within a time interval between transmissions of any two of the at least two preambles on the K1 time-frequency resources, the first node does not "consider that a contention resolution is not successful".

In an embodiment, within a time interval between transmissions of any two of the at least two preambles on the K1 time-frequency resources, the first node does not "consider that the first random access procedure is successfully completed".

In an embodiment, the first counter is updated only once within a time interval between the behavior of sending the at least two preambles on the K1 time-frequency resources and the behavior of sending the preamble on the K2 time-frequency resources by using the first target power value.

In an embodiment, within a time interval between the behavior of sending the at least two preambles on the K1 time-frequency resources and the behavior of sending the preamble on the K2 time-frequency resources by using the first target power value, the first node "considers that a random access response reception is not successful" only once.

In an embodiment, within a time interval between the behavior of sending the at least two preambles on the K1 time-frequency resources and the behavior of sending the preamble on the K2 time-frequency resources by using the first target power value, the first node "considers that a contention resolution is not successful" only once.

In an embodiment, within a time interval between the behavior of sending the at least two preambles on the K1 time-frequency resources and the behavior of sending the preamble on the K2 time-frequency resources by using the first target power value, the first node does not consider that the first random access procedure is successfully completed.

In an embodiment, the first counter is used for calculating a first power value.

In an embodiment, the first counter is used for determining a first power value.

In an embodiment, the product of the first counter and the first step is used for determining the first target power value.

In an embodiment, the product of the first counter and the first step is used for determining a first power value.

In an embodiment, the first power value is related to a first initial power, the first counter, and the first step.

In an embodiment, the first power value is related to a first initial power, a first adjusted power, the first counter, and the first step.

In an embodiment, the first target power value is not greater than a maximum output power of the first node.

In an embodiment, the first target power value is less than a maximum output power of the first node.

In an embodiment, the maximum output power of the first node is preconfigured.

In an embodiment, the maximum output power of the first node is configured by using an RRC message.

In an embodiment, the maximum output power of the first node is related to a subcarrier spacing.

In an embodiment, the maximum output power of the first node is related to a serving cell c.

In an embodiment, the maximum output power of the first node is related to a carrier f.

In an embodiment, the maximum output power of the first node is related to a sending occasion i.

In an embodiment, the maximum output power of the first node is related to a serving cell c, a carrier f, and a sending occasion i.

In an embodiment, the maximum output power of the first node is equal to P_{CMAX,f,c}(i).

In an embodiment, the maximum output power of the first node is P_{CMAX,f,c}(i).

In an embodiment, the maximum output power of the first node is a maximum output power configured for the first node for a carrier f of a serving cell c on a sending occasion i.

In an embodiment, the serving cell c is the first cell.

In an embodiment, the carrier f is an uplink carrier, associated with the first random access procedure, of the first cell.

In an embodiment, an active uplink bandwidth part (BWP) b is an initial BWP.

In an embodiment, during calculation of P_{CMAX,f,c}(i) after the first counter is updated based on K1, the sending occasion i is related to at least one of the K2 time-frequency resources.

In a sub-embodiment of this embodiment, the sending occasion i is related to only one of the K2 time-frequency resources.

In a sub-embodiment of this embodiment, the sending occasion i is related to the 1^{st} one of the K2 time-frequency resources.

In a sub-embodiment of this embodiment, the sending occasion i is related to each of the K2 time-frequency resources.

In an embodiment, for P_{CMAX,f,c}(i), refer to 3GPP TS 38.213.

In an embodiment, for P_{CMAX,f,c}(i), refer to 3GPP TS 38.101.

In an embodiment, the first target power value is equal to (a sum of the first power value and a first path loss value).

In an embodiment, the first target power value=the first power value+the first path loss value.

In an embodiment, the first power value is related to the serving cell c.

In an embodiment, the first power value is related to the carrier f.

In an embodiment, the first power value is related to the active uplink BWP b.

In an embodiment, the first power value is related to the serving cell c, the carrier f, and the active uplink BWP b.

In an embodiment, the first power value is P_{PRACH,target,f,c}.

In an embodiment, the first power value is related to the product of the first counter and the first step.

In an embodiment, the first power value is correlated with the product of the first counter and the first step.

In an embodiment, the first power value is linearly correlated with the product of the first counter and the first step.

In an embodiment, the first power value is a value of PREAMBLE_RECEIVED_TARGET_POWER.

In an embodiment, the first power value=the first initial power+(the first counter-1)×the first step.

In an embodiment, the first power value=the first initial power+the first adjusted power+(the first counter-1)×the first step.

In an embodiment, the first initial power is a value of preambleReceivedTargetPower.

In an embodiment, the first initial power is configured by using an RRC message.

In an embodiment, an RRC field in an RACH-ConfigGeneric information element (IE) is used for configuring the first initial power.

In an embodiment, an RRC field is used for configuring the first initial power, and a name of the RRC field is preambleReceivedTargetPower.

In an embodiment, an RRC field is used for configuring the first initial power, and a name of the RRC field includes at least one of preambleReceivedTargetPower, CE, Coverage, Enhancement, or Repetition.

In an embodiment, the first adjusted power is related to a preamble format.

In an embodiment, the first adjusted power is related to whether a preamble is in a long preamble format or a short preamble format.

In an embodiment, the first adjusted power is related to a subcarrier spacing µ.

In an embodiment, the first adjusted power is determined through table lookup.

In an embodiment, the first adjusted power is determined by searching a table in the section 7.3 of 3GPP TS 38.321.

In an embodiment, the first adjusted power is a value of DELTA_PREAMBLE.

In an embodiment, the first path loss value is a pathloss.

In an embodiment, the first path loss value is related to the serving cell c.

In an embodiment, the first path loss value is related to the carrier f.

In an embodiment, the first path loss value is related to the active uplink BWP b.

In an embodiment, the first path loss value is related to the serving cell c, the carrier f, and the active uplink BWP b.

In an embodiment, the first path loss value is equal to PL_{b,f,c}.

In an embodiment, the first path loss value is PL_{b,f,c}.

In an embodiment, for PL_{b,f,c}, refer to the section 7.4 of 3GPP TS 38.213.

In an embodiment, the first path loss value is measured in dB.

In an embodiment, the first path loss value is measured in dBm.

In an embodiment, the first step is preconfigured.

In an embodiment, the first step is determined by the UE.

In an embodiment, the first step is fixed in the first random access procedure.

In an embodiment, the first step is variable in the first random access procedure.

In an embodiment, the first step is configured for the serving cell c.

In an embodiment, the first step is configured for the carrier f.

In an embodiment, the first step is configured for the active uplink BWP b.

### Embodiment 2

Embodiment 2 exemplarily shows a schematic diagram of a network architecture according to an embodiment of this application, as shown in FIG. 2. FIG. 2 shows a network architecture 200 of a 5G new radio (NR)/long-term evolution (LTE)/long-term evolution advanced (LTE-A) system. The 5G NR/LTE/LTE-A network architecture 200 may be referred to as a 5G system (5GS)/evolved packet system (EPS) 200 or another suitable term. The 5GS/EPS 200 includes at least one of user equipment (UE) 201, a radio access network (RAN) 202, a 5G core network (5GC)/evolved packet core (EPC) 210, a home subscriber server (HSS)/unified data management (UDM) 220, and an Internet service 230. The 5GS/EPS may be interconnected with other access networks. However, for simplicity, these entities/interfaces are not shown. As shown in the figure, the 5GS/EPS provides a packet switching service. However, it is readily figured out by a person skilled in the art that various concepts shown throughout this application may be extended to a network providing a circuit switching service or another cellular network. The RAN includes a node 203 and another node 204. The node 203 provides user and control plane protocol termination toward the UE 201. The node 203 may be connected to the another node 204 through an Xn interface (for example, a backhaul interface)/X2 interface. The node 203 may also be referred to as a base station, a base transceiver station, a radio base station, a radio transceiver, a transceiver function, a basic service set (BSS), an extended service set (ESS), a transmission and reception point (TRP), or another suitable term. The node 203 provides the UE 201 with an access point to the 5GC/EPC 210. An example of the UE 201 includes a cellular phone, a smartphone, a Session Initiation Protocol (SIP) phone, a laptop computer, a personal digital assistant (PDA), satellite radio, non-terrestrial base station communication, satellite mobile communication, a global positioning system, a multimedia apparatus, a video apparatus, a digital audio player (for example, an MP3 player), a camera, a game console, an uncrewed aerial vehicle, an aircraft, a narrowband Internet of Things device, a machine type communication device, a land vehicle, an automobile, a wearable device, or any other apparatus with a similar function. A person skilled in the art may also refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handheld device, a user agent, a mobile client, a client, or another suitable term. The node 203 is connected to the 5GC/EPC 210 through an S1/NG interface. The 5GC/EPC 210 includes a mobility management entity (MME)/authentication management field (AMF)/session management function (SMF) 211, another MME/AMF/SMF 214, a service gateway (S-GW)/user plane function (UPF) 212, and a packet date network gateway (P-GW)/UPF 213. The MME/AMF/SMF 211 is a control node for processing signaling between the UE 201 and the 5GC/EPC 210. Generally, the MME/AMF/SMF 211 provides bearer and connection management. All user Internet Protocal (IP) packets are transmitted through the S-GW/UPF 212, and the S-GW/UPF 212 is connected to the P-GW/UPF 213. The P-GW provides UE IP address assignment and other functions. The P-GW/UPF 213 is connected to the Internet service 230. The Internet service 230 includes an Internet Protocol service corresponding to an operator, and may specifically include the Internet, an intranet, an IP multimedia subsystem (IMS), and a packet-switched streaming service.

In an embodiment, the UE 201 corresponds to the first node in this application.

In an embodiment, the UE 201 is user equipment (UE).

In an embodiment, the UE 201 is a basestation (BS) device.

In an embodiment, the UE 201 is a relay device.

In an embodiment, the node 203 corresponds to the second node in this application.

In an embodiment, the node 203 is a base station device.

In an embodiment, the node 203 is user equipment.

In an embodiment, the node 203 is a relay device.

In an embodiment, the node 203 is a gateway.

Typically, the UE 201 is user equipment, and the node 203 is a base station device.

In an embodiment, the user equipment supports transmission in a terrestrial network (Non-Terrestrial Network, NTN).

In an embodiment, the user equipment supports transmission in a non-terrestrial network (Terrestrial Network).

In an embodiment, the user equipment supports transmission in a network with a large delay difference.

In an embodiment, the user equipment supports dual connection (DC) transmission.

In an embodiment, the user equipment includes an aircraft.

In an embodiment, the user equipment includes an in-vehicle terminal.

In an embodiment, the user equipment includes a watercraft.

In an embodiment, the user equipment includes an Internet of Things terminal.

In an embodiment, the user equipment includes an industrial Internet of Things terminal.

In an embodiment, the user equipment includes a device supporting low-latency and high-reliability transmission.

In an embodiment, the user equipment includes a testing device.

In an embodiment, the user equipment includes a signaling tester.

In an embodiment, the base station device includes a base transceiver station (BTS).

In an embodiment, the base station device includes a NodeB (NB).

In an embodiment, the base station device includes a gNB.

In an embodiment, the base station device includes an eNB.

In an embodiment, the base station device includes an ng-eNB.

In an embodiment, the base station device includes an en-gNB.

In an embodiment, the base station device supports transmission in an NTN.

In an embodiment, the base station device supports transmission in a network with a large delay difference.

In an embodiment, the base station device supports transmission in a TN.

In an embodiment, the base station device includes a macrocellular base station.

In an embodiment, the base station device includes a micro cell base station.

In an embodiment, the base station device includes a pico cell base station.

In an embodiment, the base station device includes a home base station (femtocell).

In an embodiment, the base station device includes a base station device supporting a large delay difference.

In an embodiment, the base station device includes a flight platform device.

In an embodiment, the base station device includes a satellite device.

In an embodiment, the base station device includes a transmitter receiver point (TRP).

In an embodiment, the base station device includes a central unit (CU).

In an embodiment, the base station device includes a distributed unit (DU).

In an embodiment, the base station device includes a testing device.

In an embodiment, the base station device includes a signaling tester.

In an embodiment, the base station device includes an Integrated Access and Backhaul (IAB)-node.

In an embodiment, the base station device includes an IAB-donor.

In an embodiment, the base station device includes an IAB-donor-CU.

In an embodiment, the base station device includes an IAB-donor-DU.

In an embodiment, the base station device includes an IAB-DU.

In an embodiment, the base station device includes an IAB-MT.

In an embodiment, the relay device includes a relay.

In an embodiment, the relay device includes an L3 relay.

In an embodiment, the relay device includes an L2 relay.

In an embodiment, the relay device includes a router.

In an embodiment, the relay device includes a switch.

In an embodiment, the relay device includes user equipment.

In an embodiment, the relay device includes a base station device.

### Embodiment 3

Embodiment 3 exemplarily shows a schematic diagram of an embodiment of a radio protocol architecture of a user plane and a control plane according to this application, as shown in FIG. 3. FIG. 3 is a schematic diagram of an embodiment of a radio protocol architecture used for a user plane 350 and a control plane 300. FIG. 3 shows a radio protocol architecture used for the control plane 300 by using three layers: a layer 1, a layer 2, and a layer 3. The layer 1 (L1) is a lowest layer and implements various physical layer (PHY) signal processing functions. The L1 is referred to as a PHY 301 in this specification. The layer 2 (L2) 305 is above the PHY 301, and includes a Media Access Control (MAC) sublayer 302, a Radio Link Control (RLC) sublayer 303, and a Packet Data Convergence Protocol (PDCP) sublayer 304. The PDCP sublayer 304 provides multiplexing between different radio bearers and logical channels. The PDCP sublayer 304 further provides security by encrypting a data packet, and supports cross-region mobility. The RLC sublayer 303 provides segmentation and reassembly of an upper-layer data packet, retransmission of a lost data packet, and reordering of a data packet, to compensate for an unordered reception caused by a hybrid automatic repeat request (HARQ). The MAC sublayer 302 provides multiplexing between logical and transmission channels. The MAC sublayer 302 is further responsible for allocating various radio resources (for example, resource blocks) in a cell. The MAC sublayer 302 is further responsible for a HARQ operation. An RRC sublayer 306 in the layer 3 (L3) of the control plane 300 is responsible for obtaining a radio resource (namely, a radio bearer) and configuring a lower layer by using RRC signaling. A radio protocol architecture of the user plane 350 includes a layer 1 (L1) and a layer 2 (L2). A PHY 351, a PDCP sublayer 354 in the L2 355, an RLC sublayer 353 in the L2 355, and a MAC sublayer 352 in the L2 355 in the radio protocol architecture of the user plane 350 are generally the same as corresponding layers and sublayers at the control plane 300. However, the PDCP sublayer 354 further provides header compression for an upper-layer data packet to reduce radio transmission overheads. The L2 355 at the user plane 350 further includes a Service Data Adaptation Protocol (SDAP) sublayer 356. The SDAP sublayer 356 is responsible for a mapping between a QoS flow and a data radio bearer (DRB), to support diversity of services.

In an embodiment, the radio protocol architecture in FIG. 3 is applicable to the first node in this application.

In an embodiment, the radio protocol architecture in FIG. 3 is applicable to the second node in this application.

In an embodiment, the preamble in this application is generated at the PHY 301 or the PHY 351.

In an embodiment, the first signaling in this application is generated at the RRC 306.

In an embodiment, the first signaling in this application is generated at the MAC 302 or the MAC 352.

In an embodiment, the first signaling in this application is generated at the PHY 301 or the PHY 351.

### Embodiment 4

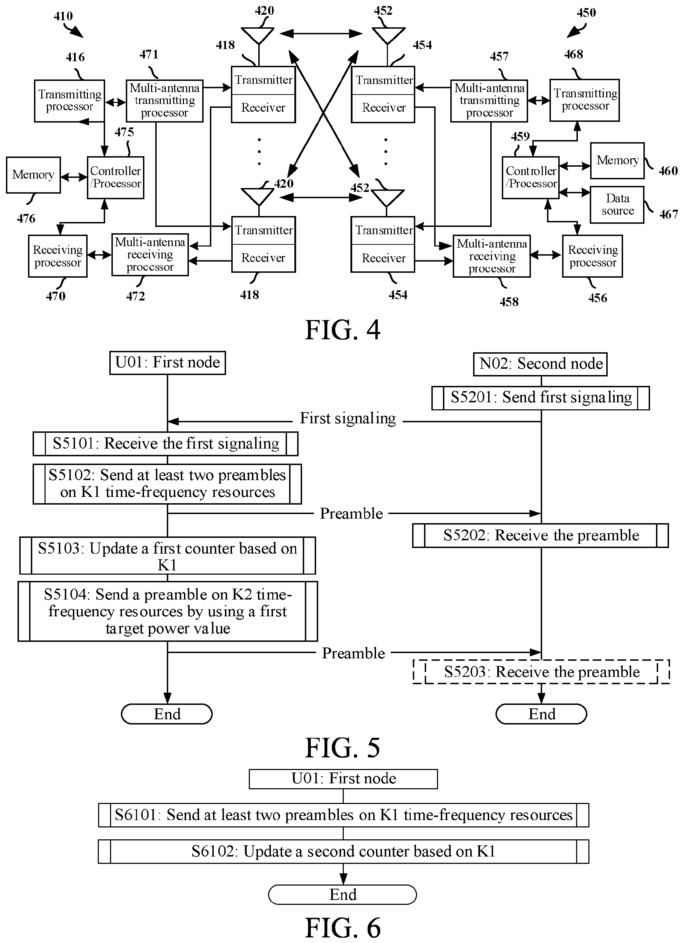

Embodiment 4 exemplarily shows a schematic diagram of a first communication device and a second communication device according to this application, as shown in FIG. 4. FIG. 4 is a block diagram of a first communication device 450 and a second communication device 410 that communicate with each other in an access network.

The first communication device 450 includes a controller/processor 459, a memory 460, a data source 467, a transmitting processor 468, a receiving processor 456, a multi-antenna transmitting processor 457, a multi-antenna receiving processor 458, a transmitter/receiver 454, and an antenna 452.

The second communication device 410 includes a controller/processor 475, a memory 476, a receiving processor 470, a transmitting processor 416, a multi-antenna receiving processor 472, a multi-antenna transmitting processor 471, a transmitter/receiver 418, and an antenna 420.

During transmission from the second communication device 410 to the first communication device 450, at the second communication device 410, an upper-layer data packet from a core network is provided to the controller/processor 475. The controller/processor 475 implements functionality of an L2. During transmission from the second communication device 410 to the first communication device 450, the controller/processor 475 provides header compression, encryption, packet segmentation and reordering, multiplexing between logical and transmission channels, and radio resource allocation to the first communication device 450 based on various priority measures. The controller/processor 475 is further responsible for retransmission of a lost packet and signaling to be transmitted to the first communication device 450. The transmitting processor 416 and the multi-antenna transmitting processor 471 implement various signal processing functions for an L1 (namely, a PHY). The transmitting processor 416 implements coding and interleaving to facilitate forward error correction (FEC) at the second communication device 410, and a mapping of a signal cluster based on various modulation schemes (for example, binary phase shift keying (BPSK), quadrature phase shift keying (QPSK), M-phase shift keying (M-PSK), or M-quadrature amplitude modulation (M-QAM)). The multi-antenna transmitting processor 471 performs digital spatial precoding, including codebook-based precoding and non-codebook-based precoding, and beamforming on coded and modulated symbols to generate one or more spatial flows. Then the transmitting processor 416 maps each spatial flow to a subcarrier, multiplexes the spatial flow with a reference signal (for example, a pilot) in time domain and/or frequency domain, and then performs inverse fast Fourier transformation (IFFT) to generate a physical channel carrying a time domain multi-carrier symbol flow. Then the multi-antenna transmitting processor 471 performs a transmit analog precoding/beamforming operation on the time domain multi-carrier symbol flow. Each transmitter 418 converts a baseband multi-carrier symbol flow provided by the multi-antenna transmitting processor 471 into a radio frequency flow, and then provides the radio frequency flow to different antennas 420.

During transmission from the second communication device 410 to the first communication device 450, at the first communication device 450, each receiver 454 receives a signal through a corresponding antenna 452. Each receiver 454 recovers information modulated onto the radio frequency carrier, converts the radio frequency flow into a baseband multi-carrier symbol flow, and provides the baseband multi-carrier symbol flow to the receiving processor 456. The receiving processor 456 and the multi-antenna receiving processor 458 implement various signal processing functions of the L1. The multi-antenna receiving processor 458 performs a receive analog precoding/beamforming operation on the baseband multi-carrier symbol flow from the receiver 454. The receiving processor 456 performs fast Fourier transformation (FFT) to transform, from time domain to frequency domain, a baseband multi-carrier symbol flow obtained through the receive analog precoding/beamforming operation. In frequency domain, a PHY data signal and a PHY reference signal are demultiplexed by the receiving processor 456. The reference signal is used for channel estimation. After multi-antenna detection is performed on the data signal in the multi-antenna receiving processor 458, any spatial flow with the first communication device 450 as a destination is recovered. A symbol in each spatial flow is demodulated and recovered in the receiving processor 456, and a soft decision is generated. Then the receiving processor 456 decodes and deinterleaves the soft decision to recover upper-layer data and a control signal that are transmitted by the second communication device 410 in a physical channel. Then the upper-layer data and the control signal are provided to the controller/processor 459. The controller/processor 459 implements a function of the L2. The controller/processor 459 may be associated with the memory 460 that stores program code and data. The memory 460 may be referred to as a computer-readable medium. During transmission from the second communication device 410 to the second communication device 450, the controller/processor 459 provides demultiplexing, packet reassembly, decryption, header decompression, and control signal processing between transmission and logical channels to recover the upper-layer data packet from the core network. Then the upper-layer data packet is provided to all protocol layers above the L2. Various control signals may also be provided to an L3 for L3 processing.

During transmission from the first communication device 450 to the second communication device 410, at the first communication device 450, a data source 467 is configured to provide an upper-layer data packet to the controller/processor 459. The data source 467 represents all protocol layers above the L2. Similar to the sending function described for the second communication device 410 during the transmission from the second communication device 410 to the first communication device 450, the controller/processor 459 implements header compression, encryption, packet segmentation and reordering, and multiplexing between logical and transmission channels based on radio resource allocation, and implements L2 functions used for a user plane and a control plane. The controller/processor 459 is further responsible for retransmission of a lost packet and signaling to be transmitted to the second communication device 410. The transmitting processor 468 performs modulation mapping and channel coding. The multi-antenna transmitting processor 457 performs digital multi-antenna spatial precoding, including codebook-based precoding and non-codebook-based precoding, and beamforming. Then the transmitting processor 468 modulates a generated spatial flow into a multi-carrier/single-carrier symbol flow. After undergoing an analog precoding/beamforming operation in the multi-antenna transmitting processor 457, the multi-carrier/single-carrier symbol flow is provided by the transmitter 454 to different antennas 452. Each transmitter 454 first converts a baseband symbol flow provided by the multi-antenna transmitting processor 457 into a radio frequency symbol flow, and then provides the radio frequency symbol flow to the antenna 452.

During transmission from the first communication device 450 to the second communication device 410, a function of the second communication device 410 is similar to the receiving function described for the first communication device 450 during the transmission from the second communication device 410 to the first communication device 450. Each receiver 418 receives a radio frequency signal through a corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement a function of the L1. The controller/processor 475 implements a function of the L2. The controller/processor 475 may be associated with the memory 476 that stores program code and data. The memory 476 may be referred to as a computer-readable medium. During transmission from the first communication device 450 to the second communication device 410, the controller/processor 475 provides demultiplexing, packet reassembly, decryption, header decompression, and control signal processing between transmission and logical channels to recover an upper-layer data packet from UE 450. An upper-layer data packet from the controller/processor 475 may be provided to the core network.

In an embodiment, the first communication device 450 includes at least one processor and at least one memory. The at least one memory includes computer program code. The at least one memory and the computer program code are configured to be used with the at least one processor. The first communication device 450 performs at least the following operations: sending at least two preambles on K1 time-frequency resources, K1 being a positive integer greater than 1; updating a first counter based on K1; and sending a preamble on K2 time-frequency resources by using a first target power value, K2 being a positive integer, where any two of the K1 time-frequency resources do not overlap in time domain, any two of the K2 time-frequency resources do not overlap in time domain, the K2 time-frequency resources are after the K1 time-frequency resources, the preambles sent on the K1 time-frequency resources and the preamble sent on the K2 time-frequency resources belong to a first random access procedure, the first counter is not updated within a time interval between transmissions of any two of the at least two preambles on the K1 time-frequency resources, and the first target power value is related to a product of the first counter and a first step.

In an embodiment, the first communication device 450 includes a memory storing a computer-readable instruction program. The computer-readable instruction program generates actions when being executed by at least one processor. The actions include: sending at least two preambles on K1 time-frequency resources, K1 being a positive integer greater than 1; updating a first counter based on K1; and sending a preamble on K2 time-frequency resources by using a first target power value, K2 being a positive integer, where any two of the K1 time-frequency resources do not overlap in time domain, any two of the K2 time-frequency resources do not overlap in time domain, the K2 time-frequency resources are after the K1 time-frequency resources, the preambles sent on the K1 time-frequency resources and the preamble sent on the K2 time-frequency resources belong to a first random access procedure, the first counter is not updated within a time interval between transmissions of any two of the at least two preambles on the K1 time-frequency resources, and the first target power value is related to a product of the first counter and a first step.

In an embodiment, the second communication device 410 includes at least one processor and at least one memory. The at least one memory includes computer program code. The at least one memory and the computer program code are configured to be used with the at least one processor. The second communication device 410 performs at least the following operations: receiving a preamble sent on K1 time-frequency resources, or receiving a preamble sent on K2 time-frequency resources, where a first counter is updated based on K1, K1 is a positive integer greater than 1, K2 is a positive integer, at least two preambles are sent on the K1 time-frequency resources, the preamble is sent on the K2 time-frequency resources by using a first target power value, any two of the K1 time-frequency resources do not overlap in time domain, any two of the K2 time-frequency resources do not overlap in time domain, the K2 time-frequency resources are after the K1 time-frequency resources, the preambles sent on the K1 time-frequency resources and the preamble sent on the K2 time-frequency resources belong to a first random access procedure, the first counter is not updated within a time interval between transmissions of any two of the at least two preambles on the K1 time-frequency resources, and the first target power value is related to a product of the first counter and a first step.

In an embodiment, the second communication device 410 includes a memory storing a computer-readable instruction program. The computer-readable instruction program generates actions when being executed by at least one processor. The actions include: receiving a preamble sent on K1 time-frequency resources, or receiving a preamble sent on K2 time-frequency resources, where a first counter is updated based on K1, K1 is a positive integer greater than 1, K2 is a positive integer, at least two preambles are sent on the K1 time-frequency resources, the preamble is sent on the K2 time-frequency resources by using a first target power value, any two of the K1 time-frequency resources do not overlap in time domain, any two of the K2 time-frequency resources do not overlap in time domain, the K2 time-frequency resources are after the K1 time-frequency resources, the preambles sent on the K1 time-frequency resources and the preamble sent on the K2 time-frequency resources belong to a first random access procedure, the first counter is not updated within a time interval between transmissions of any two of the at least two preambles on the K1 time-frequency resources, and the first target power value is related to a product of the first counter and a first step.

In an embodiment, the antenna 452, the receiver 454, the receiving processor 456, and the controller/processor 459 are configured to receive first signaling.

In an embodiment, at least one of the antenna 420, the transmitter 418, the transmitting processor 416, or the controller/processor 475 is configured to send first signaling.

In an embodiment, the antenna 452, the transmitter 454, the transmitting processor 468, and the controller/processor 459 are configured to send at least two preambles on K1 time-frequency resources.

In an embodiment, at least one of the antenna 420, the receiver 418, the receiving processor 470, or the controller/processor 475 is configured to receive at least one preamble sent on K1 time-frequency resources.

In an embodiment, the antenna 452, the transmitter 454, the transmitting processor 468, and the controller/processor 459 are configured to send a preamble on K2 time-frequency resources.

In an embodiment, at least one of the antenna 420, the receiver 418, the receiving processor 470, or the controller/processor 475 is configured to receive at least one preamble sent on K2 time-frequency resources.

In an embodiment, the antenna 452, the transmitter 454, the transmitting processor 468, and the controller/processor 459 are configured to send a preamble on K3 time-frequency resources.

In an embodiment, at least one of the antenna 420, the receiver 418, the receiving processor 470, or the controller/processor 475 is configured to receive at least one preamble sent on K3 time-frequency resources.

In an embodiment, the first communication device 450 corresponds to the first node in this application.

In an embodiment, the second communication device 410 corresponds to the second node in this application.

In an embodiment, the first communication device 450 is user equipment.

In an embodiment, the first communication device 450 is user equipment supporting a large delay difference.

In an embodiment, the first communication device 450 is user equipment supporting an NTN.

In an embodiment, the first communication device 450 is an aircraft device.

In an embodiment, the first communication device 450 has a positioning capability.

In an embodiment, the first communication device 450 does not have a positioning capability.

In an embodiment, the first communication device 450 is user equipment supporting a TN.

In an embodiment, the second communication device 410 is a base station device (gNB/eNB/ng-eNB).

In an embodiment, the second communication device 410 is a base station device supporting a large delay difference.

In an embodiment, the second communication device 410 is a base station device supporting an NTN.

In an embodiment, the second communication device 410 is a satellite device.

In an embodiment, the second communication device 410 is a flight platform device.

In an embodiment, the second communication device 410 is a base station device supporting a TN.

### Embodiment 5

Embodiment 5 exemplarily shows a flowchart of radio signal transmission according to an embodiment of this application, as shown in FIG. 5. It should be particularly noted that a sequence in this example does not limit a signal transmission sequence or an implementation sequence in this application.

A **first node U01** performs the following operations: in step S5101, receiving first signaling; in step S5102, sending at least two preambles on K1 time-frequency resources, K1 being a positive integer greater than 1; in step S5103, updating a first counter based on K1; and in step S5104, sending a preamble on K2 time-frequency resources by using a first target power value, K2 being a positive integer.

A **second node N02** performs the following operations: in step S5201, sending the first signaling; in step S5202, receiving a preamble; and in step S5203, receiving a preamble.

In Embodiment 5, at least two of the K1 time-frequency resources do not overlap in time domain, at least two of the K2 time-frequency resources do not overlap in time domain, the K2 time-frequency resources are after the K1 time-frequency resources, the preambles sent on the K1 time-frequency resources and the preamble sent on the K2 time-frequency resources belong to a first random access procedure, the first counter is not updated within a time interval between transmissions of any two of the at least two preambles on the K1 time-frequency resources, and the first target power value is related to a product of the first counter and a first step.

In an embodiment, that "at least two of the K1 time-frequency resources do not overlap in time domain" includes: any two of the K1 time-frequency resources do not overlap in time domain.

In an embodiment, that "at least two of the K2 time-frequency resources do not overlap in time domain" includes: any two of the K2 time-frequency resources do not overlap in time domain.

In an embodiment, the first node U01 is user equipment.

In an embodiment, the first node U01 is a base station device.

In an embodiment, the first node U01 is a relay device.

In an embodiment, the second node N02 is a base station device.

In an embodiment, the second node N02 is user equipment.

In an embodiment, the second node N02 is a relay device.

In an embodiment, the first node U01 is user equipment, and the second node N02 is a base station device.

In an embodiment, the first node U01 is user equipment, and the second node N02 is a relay device.

In an embodiment, the first node U01 is user equipment, and the second node N02 is user equipment.

In an embodiment, the first node U01 is a base station device, and the second node N02 is a base station device.

In an embodiment, the first node U01 is a relay device, and the second node N02 is a base station device.

In an embodiment, the first node U01 and the second node N02 are connected to each other through a uu interface.

In an embodiment, the first node U01 and the second node N02 are connected to each other through an Xn interface.

In an embodiment, the first node U01 and the second node N02 are connected to each other through an X2 interface.

In an embodiment, the first node U01 and the second node N02 are connected to each other through a PC5 interface.

In an embodiment, the first node U01 and the second node N02 are connected to each other through an air interface.

In an embodiment, the first signaling indicates the first step.

In an embodiment, the first signaling includes the first step.

In an embodiment, the first signaling is used for determining the first step.

In an embodiment, the first signaling is used for configuring the first step.

In an embodiment, the first signaling is an RRC message.

In an embodiment, the first signaling is an RRC information element (IE) in an RRC message.

In an embodiment, the first signaling is an RRC field in an RRC message.

In an embodiment, the first signaling is a MAC control element (CE).

In an embodiment, the first signaling includes an RA-Prioritization IE, and an RRC field in the RA-Prioritization IE indicates the first step.

In an embodiment, the first signaling includes an RACH-ConfigCommon IE, and an RRC field in the RACH-ConfigCommon IE indicates the first step.

In an embodiment, the first signaling includes an RRC field, the RRC field indicates the first step, and a name of the RRC field includes powerRampingStep.

In a sub-embodiment of this embodiment, a name of the RRC field includes at least one of power, Ramping, Step, CE, Coverage, Enhancement, or Repetition.

In a sub-embodiment of this embodiment, a name of the RRC field includes at least one of power, Ramping, Step, High, Priority, CE, Coverage, Enhancement, or Repetition.

In a sub-embodiment of this embodiment, a name of the RRC field includes a powerRampingStep field.

In a sub-embodiment of this embodiment, a name of the RRC field is a powerRampingStep field.

In a sub-embodiment of this embodiment, a name of the RRC field includes a powerRampingStepHighPriority field.

In a sub-embodiment of this embodiment, a name of the RRC field is a powerRampingStepHighPriority field.

In an embodiment, the first step is a power ramping step.

In an embodiment, the first step is a power ramping step for a prioritized random access procedure.

In an embodiment, the first step is a power ramping step dedicated for PRACH coverage enhancement.

In an embodiment, the first step is a power ramping step dedicated for NR PRACH coverage enhancement.

In an embodiment, the first signaling indicates a candidate step, the first step is related to the candidate step, and the first step is related to at least one of K1 or K2.

In an embodiment, the first signaling indicates a candidate step.

In an embodiment, the first signaling includes the candidate step.

In an embodiment, the first signaling is used for determining the candidate step.

In an embodiment, the first signaling is used for configuring the candidate step.

In an embodiment, the first signaling includes an RA-Prioritization IE, and an RRC field in the RA-Prioritization IE indicates the candidate step.

In an embodiment, the first signaling includes an RACH-ConfigCommon IE, and an RRC field in the RACH-ConfigCommon IE indicates the candidate step.

In an embodiment, the first signaling includes an RRC field, and the RRC field indicates the candidate step.

In a sub-embodiment of this embodiment, a name of the RRC field includes at least one of power, Ramping, Step, CE, Coverage, Enhancement, or Repetition.

In a sub-embodiment of this embodiment, the name of the RRC field includes at least one of power, Ramping, Step, High, Priority, CE, Coverage, Enhancement, or Repetition.

In a sub-embodiment of this embodiment, the name of the RRC field includes a powerRampingStep field.

In a sub-embodiment of this embodiment, a name of the RRC field is a powerRampingStep field.

In a sub-embodiment of this embodiment, a name of the RRC field includes a powerRampingStepHighPriority field.

In a sub-embodiment of this embodiment, a name of the RRC field is a powerRampingStepHighPriority field.

In an embodiment, the candidate step is used for determining the first step.

In an embodiment, the candidate step is used for calculating the first step.

In an embodiment, the candidate step and at least one of K1 or K2 are used for jointly determining the first step.

In an embodiment, K1 and the candidate step are used for jointly determining the first step.

In an embodiment, K2 and the candidate step are used for jointly determining the first step.

In an embodiment, the first offset is an offset for the candidate step.

In an embodiment, the first offset is preconfigured.

In an embodiment, the first offset is configured by using an RRC message.

In an embodiment, the first offset is a reduction value.

In an embodiment, the first offset, at least one of K1 or K2, and the candidate step are used for jointly determining the first step.

In an embodiment, the first offset, K1, and the candidate step are used for jointly determining the first step.

In an embodiment, the first offset, K2, and the candidate step are used for jointly determining the first step.

In an embodiment, the first step is related to the candidate step, and the first step is related to K1.

In an embodiment, the first step is linearly correlated with (a product of K1 and the candidate step).

In an embodiment, the first step is equal to (a product of K1 and the candidate step).

In an embodiment, the first step is related to the candidate step, and the first step is related to K2.

In an embodiment, the first step is linearly correlated with (a product of K2 and the candidate step).

In an embodiment, the first step is equal to (a product of K2 and the candidate step).

In an embodiment, the first step is related to K1, and the first step is related to K2.

In an embodiment, the first step is related to (a difference between K2 and K1).

In an embodiment, the first step is linearly correlated with (a difference between K2 and K1).

In an embodiment, the first step is related to the candidate step, the first step is related to K1, and the first step is related to K2.

In an embodiment, the first step is related to (a product of (a difference between K2 and K1) and the candidate step).

In an embodiment, the first step is linearly correlated with (a product of (a difference between K2 and K1) and the candidate step).

In an embodiment, the first step is equal to (a product of (a difference between K2 and K1) and the candidate step).

In an embodiment, the first step is related to the candidate step, and the first step is related to the first offset.

In an embodiment, the first step is related to (a sum of the candidate step and the first offset).

In an embodiment, the first step is linearly correlated with (a sum of the candidate step and the first offset).

In an embodiment, the first step=the first offset+the candidate step.

In an embodiment, the first offset is related to a difference between K1 and K2.

In a sub-embodiment of this embodiment, if K1 is equal to K2, the first offset is equal to 0.

In a sub-embodiment of this embodiment, if K1 is not equal to K2, the first offset is not equal to 0.

In an embodiment, the first step is related to the candidate step, the first step is related to at least one of K1 or K2, and the first step is related to the first offset.

In an embodiment, the first step is related to (a sum of (a product of the first offset and K1) and the candidate step).

In an embodiment, the first step is equal to (a sum of (a product of the first offset and K1) and the candidate step).

In an embodiment, the first step is related to (a sum of (a product of the first offset and K2) and the candidate step).

In an embodiment, the first step is equal to (a sum of (a product of the first offset and K2) and the candidate step).

In an embodiment, the first step is related to (a sum of (a product of the first offset and (a difference between K2 and K1)) and the candidate step).

In an embodiment, the first step is equal to (a sum of (a product of the first offset and (a difference between K2 and K1)) and the candidate step).

In an embodiment, the first step=(the first offset×K1)+the candidate step.

In an embodiment, the first step=(the first offset×K2)+the candidate step.

In an embodiment, the first step=(the first offset×(K2-K1))+the candidate step.

In an embodiment, in step S5202, the second node receives at least one preamble sent on the K1 time-frequency resources.

In an embodiment, step S5203 is optional.

In an embodiment, step S5203 exists.

In a sub-embodiment of this embodiment, in step S5203, the second node receives at least one preamble sent on the K2 time-frequency resources.

In an embodiment, step S5203 does not exist.

In a sub-embodiment of this embodiment, in step S5203, the second node does not receive any preamble sent on the K2 time-frequency resources.

### Embodiment 6

Embodiment 6 exemplarily shows a flowchart of radio signal transmission according to another embodiment of this application, as shown in FIG. 6. It should be particularly noted that a sequence in this example does not limit a signal transmission sequence or an implementation sequence in this application.

A **first node U01** performs the following operations: in step S6101, sending at least two preambles on K1 time-frequency resources; and in step S6102, updating a second counter based on K1 after the behavior of sending the at least two preambles on the K1 time-frequency resources.

In Embodiment 6, the second counter is used for counting a quantity of times of sending a preamble.

In an embodiment, the second counter is PREAMBLE _TRANSMISSION_COUNTER.

In an embodiment, a name of the second counter includes PREAMBLE_TRANSMISSION_COUNTER.

In an embodiment, a name of the second counter includes at least one of PREAMBLE, TRANSMISSION, COUNTER, CE, COVERAGE, ENHANCEMENT, or REPETITION.

In an embodiment, the "after the behavior of sending a preamble on K2 time-frequency resources" includes: after a preamble is sent on the last one of the K2 time-frequency resources.

In an embodiment, the "after the behavior of sending a preamble on K2 time-frequency resources" includes: after a preamble is sent on each of the K2 time-frequency resources.

In an embodiment, the "after the behavior of sending a preamble on K2 time-frequency resources" includes: after an end moment of the last one of the K2 time-frequency resources.

In an embodiment, the "updating a second counter based on K1" includes: increasing the second counter by K1.

In an embodiment, the "updating a second counter based on K1" includes: increasing the second counter by M1, M1 being a positive integer not greater than K1.

In an embodiment, M1 is a quantity of different preambles sent on the K1 time-frequency resources.

In an embodiment, M1 is a quantity of preambles sent on the K1 time-frequency resources.

In an embodiment, the first node sends a preamble on each of the K1 time-frequency resources.

In an embodiment, the first node does not send a preamble on at least one latest time-frequency resource among the K1 time-frequency resources.

In an embodiment, the second counter is used for counting a quantity of times of sending a preamble in a random access procedure.

In an embodiment, when the 1^{st} preamble is sent on the K1 time-frequency resources, the second counter is equal to 1.

In an embodiment, when the 1^{st} preamble is sent on the K1 time-frequency resources, the second counter is greater than 1.

In an embodiment, the second counter updated based on K1 reaches a sum of a maximum value of the second counter and 1.

In an embodiment, the second counter updated based on K1 does not reach a sum of a maximum value of the second counter and 1.

In an embodiment, the maximum value of the second counter is preambleTransMax.

In an embodiment, the second counter updated based on K1 reaching the maximum value of the second counter means that PREAMBLE_TRANSMISSION_COUNTER=preambleTransMax+1.

In an embodiment, if the second counter updated based on K1 reaches the maximum value of the second counter, a MAC layer of the first node indicates a random access problem to a higher layer of the first node.

In an embodiment, the behavior of updating the second counter based on K1 is performed before the behavior of updating a first counter.

### Embodiment 7

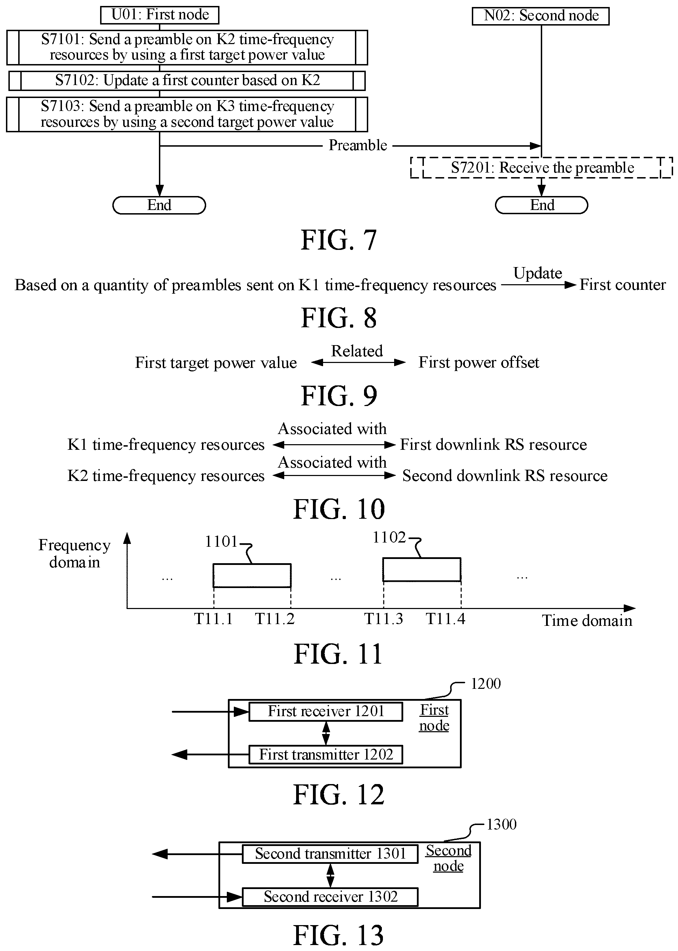

Embodiment 7 exemplarily shows a flowchart of radio signal transmission according to still another embodiment of this application, as shown in FIG. 7. It should be particularly noted that a sequence in this example does not limit a signal transmission sequence or an implementation sequence in this application.

A **first node U01** performs the following operations: in step S7101, sending a preamble on K2 time-frequency resources by using a first target power value; in step S7102, updating a first counter after the preamble is sent on the K2 time-frequency resources; and in step S7103, sending a preamble on K3 time-frequency resources by using a second target power value.

A **second node N02** performs the following operation: in step S7201, receiving a preamble.

In Embodiment 7, at least two of the K3 time-frequency resources do not overlap in time domain, the K3 time-frequency resources are after the K2 time-frequency resources, and the second target power value is a maximum output power of the first node.

In an embodiment, the preamble sent on the K3 time-frequency resources belongs to a first random access procedure.

In an embodiment, within a time interval between transmission of the preamble on the K2 time-frequency resources and transmission of the preamble on the K3 time-frequency resources, the first random access procedure is not terminated, and the first random access procedure is not considered to have been successfully completed.

In an embodiment, the first counter is not initialized within a time interval between transmission of the preamble on the K2 time-frequency resources and transmission of the preamble on the K3 time-frequency resources.

In an embodiment, the second counter is not initialized within a time interval between transmission of the preamble on the K2 time-frequency resources and transmission of the preamble on the K3 time-frequency resources.

In an embodiment, the first counter is updated based on K2.

In an embodiment, the "updating a first counter" includes: increasing the first counter by K2.

In an embodiment, the "updating a first counter" includes: increasing the first counter by P2, P2 being a positive integer not greater than K2.

In an embodiment, the "updating a first counter" includes: increasing the first counter by 1.

In an embodiment, the "after the preamble is sent on the K2 time-frequency resources" means: after the behavior of sending the preamble on the K2 time-frequency resources by using the first target power value.

In an embodiment, the "after the preamble is sent on the K2 time-frequency resources" includes: after the preamble is sent on the K2 time-frequency resources and before the preamble is sent on the K3 time-frequency resources.

In an embodiment, the "after the preamble is sent on the K2 time-frequency resources" includes: after it is considered that a random access response for the preamble sent on the K2 time-frequency resources is not successfully received, and random access resource selection is performed, the random access resource selection being used for determining the K2 time-frequency resources.

In an embodiment, the "after the preamble is sent on the K2 time-frequency resources" includes: after it is considered that a contention resolution for the preamble sent on the K2 time-frequency resources is not successful, and random access resource selection is performed, the random access resource selection being used for determining the K2 time-frequency resources.

In an embodiment, the "after the preamble is sent on the K2 time-frequency resources" includes: after random access resource selection is performed after the preamble is sent on the K2 time-frequency resources, the random access resource selection being used for determining the K2 time-frequency resources.

In an embodiment, the "sending a preamble on K3 time-frequency resources by using a second target power value" includes: sending the preamble on the K3 time-frequency resources by using the second target power value.

In an embodiment, the "sending a preamble on K3 time-frequency resources by using a second target power value" includes: sending the preamble on the 1^{st} one of the K3 time-frequency resources by using the second target power value.

In an embodiment, the "sending a preamble on K3 time-frequency resources by using a second target power value" includes: sending the preamble on each of the K3 time-frequency resources by using the second target power value.

In an embodiment, the "sending a preamble on K3 time-frequency resources by using a second target power value" includes: sending the preamble on at least one of the K3 time-frequency resources by using the second target power value.

In an embodiment, powers used for sending preambles on any two of the K3 time-frequency resources are equal.

In an embodiment, powers used for sending preambles on any two of the K3 time-frequency resources are not equal.

In an embodiment, powers used for sending preambles on at least two of the K3 time-frequency resources are equal.

In an embodiment, powers used for sending preambles on at least two of the K3 time-frequency resources are not equal.

In an embodiment, the 1^{st} symbol after an end moment of one of the K3 time-frequency resources is a start moment of another one of the K3 time-frequency resources.

In an embodiment, a symbol after an end moment of one of the K3 time-frequency resources is a start moment of another one of the K3 time-frequency resources.

In an embodiment, any two of the K3 time-frequency resources do not overlap in time domain.

In an embodiment, any two of the K3 time-frequency resources are discontinuous in time domain.

In an embodiment, any two of the K3 time-frequency resources are continuous in time domain.

In an embodiment, at least two of the K3 time-frequency resources do not overlap in time domain.

In an embodiment, durations of any two of the K3 time-frequency resources in time domain are equal.

In an embodiment, durations of any two of the K3 time-frequency resources in time domain are not equal.

In an embodiment, durations of at least two of the K3 time-frequency resources in time domain are equal.

In an embodiment, durations of at least two of the K3 time-frequency resources in time domain are not equal.

In an embodiment, any two of the K3 time-frequency resources overlap in frequency domain.

In an embodiment, any two of the K3 time-frequency resources do not overlap in frequency domain.

In an embodiment, at least two of the K3 time-frequency resources overlap in frequency domain.

In an embodiment, at least two of the K3 time-frequency resources do not overlap in frequency domain.

In an embodiment, any two of the K3 time-frequency resources occupy a same frequency domain resource.

In an embodiment, any two of the K3 time-frequency resources occupy different frequency domain resources.

In an embodiment, at least two of the K3 time-frequency resources occupy a same frequency domain resource.

In an embodiment, at least two of the K3 time-frequency resources occupy different frequency domain resources.

In an embodiment, that "the K3 time-frequency resources are after the K2 time-frequency resources" includes: the 1^{st} one of the K3 time-frequency resources is after the last one of the K2 time-frequency resources.

In an embodiment, that "the K3 time-frequency resources are after the K2 time-frequency resources" includes: a start moment of the 1^{st} one of the K3 time-frequency resources is after an end moment of the last one of the K1 time-frequency resources.

In an embodiment, that "the K3 time-frequency resources are after the K2 time-frequency resources" includes: the K3 time-frequency resources are later than the K2 time-frequency resources in time domain.

In an embodiment, that "the K3 time-frequency resources are after the K2 time-frequency resources" includes: the 1^{st} one of the K3 time-frequency resources is after the 1^{st} one of the K2 time-frequency resources.

In an embodiment, the first counter is updated only once within a time interval between the behavior of sending the preamble on the K2 time-frequency resources by using the first target power value and the behavior of sending the preamble on the K3 time-frequency resources by using the second target power value.

In an embodiment, the first counter is updated at least once within a time interval between the behavior of sending the preamble on the K2 time-frequency resources by using the first target power value and the behavior of sending the preamble on the K3 time-frequency by using the second target power value.

In an embodiment, the first counter is not updated within a time interval between transmissions of any two preambles on the K2 time-frequency resources.

In an embodiment, the second target power value is equal to the maximum output power of the first node.

In an embodiment, whether the updated first counter reaches a first integer is used for determining whether to send a preamble by using the maximum output power of the first node.

In a sub-embodiment of this embodiment, if the updated first counter reaches the first integer, a preamble is sent by using the maximum output power of the first node.

In a sub-embodiment of this embodiment, if the updated first counter does not reach the first integer, the first target power value is related to a product of the first counter and a first step.

In an embodiment, whether a power calculated based on the updated first counter is greater than the maximum output power of the first node is used for determining whether to send a preamble by using the maximum output power of the first node.

In a sub-embodiment of this embodiment, if the power calculated based on the updated first counter is greater than the maximum output power of the first node, a preamble is sent by using the maximum output power of the first node.

In a sub-embodiment of this embodiment, if the power calculated based on the updated first counter is not greater than the maximum output power of the first node, a preamble is sent by using the power calculated based on the updated first counter.

In a sub-embodiment of this embodiment, after the first counter is updated, a preamble is sent by using min {the power calculated based on the updated first counter, the maximum output power of the first node}.

In an embodiment, whether P_{PRACH,target,f,c} + PL_{b,f,c} calculated based on the updated first counter is greater than the maximum output power of the first node is used for determining whether to send a preamble by using the maximum output power of the first node.

In a sub-embodiment of this embodiment, if P_{PRACH,target,f,c} + PL_{b,f,c} calculated based on the updated first counter is greater than the maximum output power of the first node, a preamble is sent by using the maximum output power of the first node.

In a sub-embodiment of this embodiment, if P_{PRACH,target,f,c} + PL_{b,f,c} calculated based on the updated first counter is not greater than the maximum output power of the first node, a preamble is sent by using P_{PRACH,target,f,c} + PL_{b,f,c}.

In a sub-embodiment of this embodiment, after the first counter is updated, a preamble is sent by using min{P_{PRACH,target,f,c} + PL_{b,f,c}, the maximum output power of the first node}.

In an embodiment, a power calculated based on the updated first counter after the preamble is sent on the K2 time-frequency resources being greater than the maximum output power of the first node is used for determining that the second target power value is the maximum output power of the first node.

In an embodiment, a power calculated based on the updated first counter after the preamble is sent on the K2 time-frequency resources being not less than the maximum output power of the first node is used for determining that the second target power value is the maximum output power of the first node.

In an embodiment, P_{PRACH,target,f,c} + PL_{b,f,c} calculated based on the updated first counter after the preamble is sent on the K2 time-frequency resources being greater than the maximum output power of the first node is used for determining that the second target power value is the maximum output power of the first node.

In an embodiment, P_{PRACH,target,f,c} + PL_{b,f,c} calculated based on the updated first counter after the preamble is sent on the K2 time-frequency resources being not less than the maximum output power of the first node is used for determining that the second target power value is the maximum output power of the first node.

In an embodiment, the first counter updated based on K2 reaches a first integer, and the first integer is configurable.

In a sub-embodiment of this embodiment, the first counter updated based on K2 reaching the first integer is used for determining that the second target power value is the maximum output power of the first node.

In a sub-embodiment of this embodiment, the second target power value is irrelevant to whether P_{PRACH,target,f,c} + PL_{b,f,c} calculated based on the updated first counter after the preamble is sent on the K2 time-frequency resources is greater than the maximum output power of the first node.

In a sub-embodiment of this embodiment, the first counter reaching the first integer is used for determining to send a preamble on the K3 time-frequency resources by using the second target power value, and the second target power value is the maximum output power of the first node.

In a sub-embodiment of this embodiment, the first counter reaching the first integer includes: the first counter is greater than the first integer.

In a sub-embodiment of this embodiment, the first counter reaching the first integer includes: the first counter is not less than the first integer.

In a sub-embodiment of this embodiment, the first counter updated based on K1 does not reach the first integer.

In a sub-embodiment of this embodiment, that the first counter updated based on K1 does not reach the first integer is used for determining to send a preamble on the K2 time-frequency resources by using the first target power value, and the first target power value is related to a product of the first counter and a first step.

In an embodiment, after the first counter is updated after the preamble is sent on the K2 time-frequency resources, during calculation of P_{CMAX,f,c}(i), a sending occasion i is related to at least one of the K3 time-frequency resources.

In a sub-embodiment of this embodiment, the sending occasion i is related to only one of the K3 time-frequency resources.

In a sub-embodiment of this embodiment, the sending occasion i is related to the 1^{st} one of the K3 time-frequency resources.

In a sub-embodiment of this embodiment, the sending occasion i is related to each of the K3 time-frequency resources.

In an embodiment, step S7201 is optional.

In an embodiment, step S7201 exists.

In a sub-embodiment of this embodiment, in step S7201, the second node receives at least one preamble sent on the K3 time-frequency resources.

In an embodiment, step S7201 does not exist.

In a sub-embodiment of this embodiment, in step S7201, the second node does not receive any preamble sent on the K3 time-frequency resources.

### Embodiment 8

Embodiment 8 exemplarily shows a schematic diagram of updating a first counter based on a quantity of preambles sent on K1 time-frequency resources according to an embodiment of this application.

In Embodiment 8, the behavior of updating the first counter based on K1 includes: updating the first counter based on the quantity of preambles sent on the K1 time-frequency resources.

In an embodiment, the quantity of preambles sent on the K1 time-frequency resources is not greater than K1.

In an embodiment, the quantity of preambles sent on the K1 time-frequency resources is related to monitoring, in an ra-ResponseWindow, on a PDCCH scrambled by an RA-RNTI.

In an embodiment, the quantity of preambles sent on the K1 time-frequency resources is related to a random access response received in the ra-ResponseWindow.

In an embodiment, a start moment of the ra-ResponseWindow is related to an end moment of at least the earliest one of the K1 time-frequency resources.

In an embodiment, if a random access response including an RAPID field is received and a random access preamble identifier in the RAPID field matches an identifier of a preamble sent on at least one of the K1 time-frequency resources, no preamble is sent on a time-frequency resource, whose start moment is after the random access response, among the K1 time-frequency resources.

In an embodiment, the "updating the first counter based on the quantity of preambles sent on the K1 time-frequency resources" includes: an increment value of the first counter is equal to the quantity of preambles sent by a first node on the K1 time-frequency resources.

In an embodiment, if K1 is equal to 2 and the quantity of preambles sent on the K1 time-frequency resources is equal to 1, the first counter is increased by 1.

In an embodiment, if K1 is equal to 2 and the quantity of preambles sent on the K1 time-frequency resources is equal to 2, the first counter is increased by 2.

In an embodiment, if K1 is equal to 3 and the quantity of preambles sent on the K1 time-frequency resources is equal to 2, the first counter is increased by 2.

In an embodiment, if K1 is equal to 3 and the quantity of preambles sent on the K1 time-frequency resources is equal to 3, the first counter is increased by 3.

### Embodiment 9

Embodiment 9 exemplarily shows a schematic diagram showing that a first target power value is related to a first power offset according to an embodiment of this application, as shown in FIG. 9.

In Embodiment 9, the first target power value is related to the first power offset.

In an embodiment, the first target power value is linearly correlated with the first power offset.

In an embodiment, the first power offset is used for determining the first target power value.

In an embodiment, the first power offset is used for determining a first power value.

In an embodiment, the first power value is related to the first power offset.

In an embodiment, the first power value is correlated with the first power offset.

In an embodiment, the first power value is linearly correlated with the first power offset.

In an embodiment, the first power value is logarithmically correlated with the first power offset.

In an embodiment, the first power value is related to a first initial power, a first counter, a first step, and the first power offset.

In an embodiment, the first power value is related to a first initial power, a first adjusted power, a first counter, a first step, and the first power offset.

In an embodiment, the first power value is linearly correlated with (a sum of (a product of (a difference between the first counter and 1) and the first step) and the first power offset).

In an embodiment, the first power value=the first initial power+(the first counter-1)×the first step+the first power offset.

In an embodiment, the first power value=the first initial power+the first adjusted power+(the first counter-1)×the first step+the first power offset.

In an embodiment, the first power offset is a fixed value.

In an embodiment, the first power offset is variable.

In an embodiment, the first power offset is configurable.

In a sub-embodiment of this embodiment, an RRC message is used for configuring the first power offset.

In a sub-embodiment of this embodiment, an RRC IE is used for configuring the first power offset.

In a sub-embodiment of this embodiment, an RRC field is used for configuring the first power offset.

In a sub-embodiment of this embodiment, an RRC field in an RACH-ConfigCommon IE is used for configuring the first power offset.

In a sub-embodiment of this embodiment, an RRC field in an RACH-ConfigGeneric IE is used for configuring the first power offset.

In an embodiment, the first power offset is related to K2.

In a sub-embodiment of this embodiment, K2 is used for determining the first power offset.

In a sub-embodiment of this embodiment, the first power offset is a function of K2.

In a sub-embodiment of this embodiment, the first power offset is linearly correlated with K2.

In a sub-embodiment of this embodiment, the first power offset is logarithmically correlated with K2.

In a sub-embodiment of this embodiment, the first power offset is linearly correlated with (-10*log10(K2)).

In a sub-embodiment of this embodiment, the first power offset is equal to (-10*log10(K2)).

In a sub-embodiment of this embodiment, the first power offset=-10*log10(K2).

In a sub-embodiment of this embodiment, the first power offset=-10*log10(K2/2).

In a sub-embodiment of this embodiment, the first power offset is irrelevant to K2.

### Embodiment 10

Embodiment 10 exemplarily shows a schematic diagram showing that K1 time-frequency resources and K2 time-frequency resources are respectively associated with a first downlink RS resource and a second downlink RS resource according to an embodiment of this application, as shown in FIG. 10.

In Embodiment 10, the K1 time-frequency resources are associated with the first downlink RS resource, the K2 time-frequency resources are associated with the second downlink RS resource, and the first downlink RS resource is different from the second downlink RS resource.

In an embodiment, the first downlink RS resource is not the second downlink RS resource.

In an embodiment, indexes of the first downlink RS resource and the second downlink RS resource are different.

In an embodiment, types of the first downlink RS resources and the second downlink RS resources are different.

In an embodiment, at least one of types or indexes of the first downlink RS resource and the second downlink RS resource are different.

In an embodiment, the K1 time-frequency resources are associated only with the first downlink RS resource, and the K2 time-frequency resources are associated only with the second downlink RS resource.

In an embodiment, the K1 time-frequency resources are not associated with a plurality of downlink RS resources, and the K2 time-frequency resources are not associated with a plurality of downlink RS resources.

In an embodiment, the first downlink RS resource is one downlink RS resource.

In an embodiment, before the behavior of sending at least two preambles on the K1 time-frequency resources, the first downlink RS resource is determined.

In a sub-embodiment of this embodiment, a first node determines the first downlink RS resource based on an RSRP.

In a sub-embodiment of this embodiment, a first node randomly selects the first downlink RS resource.

In a sub-embodiment of this embodiment, an L1-RRSP measurement result for the first downlink RS resource is not less than a threshold.

In an embodiment, that "the K1 time-frequency resources are associated with the first downlink RS resource" includes: time domain locations of the K1 time-frequency resources are associated with the first downlink RS resource.

In an embodiment, that "the K1 time-frequency resources are associated with the first downlink RS resource" includes: the first downlink RS resource is used for determining a time domain location of each of the K1 time-frequency resources.

In an embodiment, that "the K1 time-frequency resources are associated with the first downlink RS resource" includes: the K1 time-frequency resources are associated with the first downlink RS resource in time domain.

In an embodiment, the first node determines the time domain location of each of the K1 time-frequency resources based on the first downlink RS resource.

In an embodiment, the first node determines a time domain location of the 1^{st} one of the K1 time-frequency resources based on the first downlink RS resource, and the time domain location of the 1^{st} one of the K1 time-frequency resources is used for determining a time domain location of a time-frequency resource among the K1 time-frequency resources other than the 1^{st} time-frequency resource.

In an embodiment, the second downlink RS resource is one downlink RS resource.

In an embodiment, before the behavior of sending a preamble on the K2 time-frequency resources by using a first target power value, the second downlink RS resource is determined.

In a sub-embodiment of this embodiment, the first node determines the second downlink RS resource based on an RSRP.

In a sub-embodiment of this embodiment, the first node randomly selects the second downlink RS resource.

In a sub-embodiment of this embodiment, an L1-RRSP measurement result for the second downlink RS resource is not less than a threshold.

In an embodiment, that "the K2 time-frequency resources are associated with the second downlink RS resource" includes: time domain locations of the K2 time-frequency resources are associated with the second downlink RS resource.

In an embodiment, that "the K2 time-frequency resources are associated with the second downlink RS resource" includes: the second downlink RS resource is used for determining a time domain location of each of the K2 time-frequency resources.

In an embodiment, that "the K2 time-frequency resources are associated with the second downlink RS resource" includes: the K2 time-frequency resources are associated with the second downlink RS resource in time domain.

In an embodiment, the first node determines the time domain location of each of the K2 time-frequency resources based on the second downlink RS resource.

In an embodiment, the first node determines a time domain location of the 1^{st} one of the K2 time-frequency resources based on the second downlink RS resource, and the time domain location of the 1^{st} one of the K2 time-frequency resources is used for determining a time domain location of a time-frequency resource among the K2 time-frequency resources other than the 1^{st} time-frequency resource.

### Embodiment 11

Embodiment 11 exemplarily shows a schematic diagram of a time-frequency resource set according to an embodiment of this application, as shown in FIG. 11. In FIG. 11, a horizontal axis represents time domain, a vertical axis represents frequency domain, a block 1101 and a block 1102 each represent one time-frequency resource in the time-frequency resource set, and ellipses represent other time-frequency resources in the time-frequency resource set. It should be particularly noted that this example does not limit whether any two time-frequency resources in the time-frequency resource set in this application overlap in frequency domain, and does not limit whether any two time-frequency resources in the time-frequency resource set in this application overlap in time domain.

In Embodiment 11, a moment T11.1 is a start moment of a time-frequency resource represented by the block 1101, a moment T11.2 is an end moment of the time-frequency resource represented by the block 1101, a moment T11.3 is a start moment of a time-frequency resource represented by the block 1102, a moment T11.2 is an end moment of the time-frequency resource represented by the block 1102, and a first node separately sends preambles on the time-frequency resource represented by the block 1101 and the time-frequency resource represented by the block 1102.

In an embodiment, each ellipsis in FIG. 11 is optional.

In an embodiment, at least one ellipsis in FIG. 11 does not exist.

In an embodiment, at least one ellipsis in FIG. 11 exists.

In an embodiment, the time-frequency resource represented by the block 1101 and the time-frequency resource represented by the block 1102 are adjacent time-frequency resources.

In an embodiment, the time-frequency resource represented by the block 1101 and the time-frequency resource represented by the block 1102 are not adjacent time-frequency resources.

In an embodiment, at least one time-frequency resource in the time-frequency resource set exists between the moment T11.2 and the moment T11.3.

In an embodiment, no time-frequency resource in the time-frequency resource set exists between the moment T11.2 and the moment T11.3.

In an embodiment, the moment T11.2 and the moment T11.3 are continuous in time domain.

In an embodiment, the moment T11.2 and the moment T11.3 are discontinuous in time domain.

In an embodiment, the moment T11.2 is earlier than the moment T11.3.

In an embodiment, the moment T11.2 is later than the moment T11.3.

In an embodiment, the time-frequency resource set is K1 time-frequency resources.

In an embodiment, the time-frequency resource set is K2 time-frequency resources.

In an embodiment, the time-frequency resource set is K3 time-frequency resources.

### Embodiment 12

Embodiment 12 exemplarily shows a block diagram of a structure of a processing apparatus used in a first node according to an embodiment of this application, as shown in FIG. 12. In FIG. 12, the processing apparatus 1200 in the first node includes a first receiver 1201 and a first transmitter 1202.

The first transmitter 1202 is configured to: send at least two preambles on K1 time-frequency resources, K1 being a positive integer greater than 1; update a first counter based on K1; and send a preamble on K2 time-frequency resources by using a first target power value, K2 being a positive integer;
In Embodiment 12, at least two of the K1 time-frequency resources do not overlap in time domain, at least two of the K2 time-frequency resources do not overlap in time domain, the K2 time-frequency resources are after the K1 time-frequency resources, the preambles sent on the K1 time-frequency resources and the preamble sent on the K2 time-frequency resources belong to a first random access procedure, the first counter is not updated within a time interval between transmissions of any two of the at least two preambles on the K1 time-frequency resources, and the first target power value is related to a product of the first counter and a first step.

In an embodiment, the behavior of updating the first counter based on K1 includes: updating the first counter based on a quantity of preambles sent on the K1 time-frequency resources.

In an embodiment, the first transmitter 1202 is configured to: update the first counter after the preamble is sent on the K2 time-frequency resources; and send a preamble on K3 time-frequency resources by using a second target power value, where at least two of the K3 time-frequency resources do not overlap in time domain, the K3 time-frequency resources are after the K2 time-frequency resources, the second target power value is a maximum output power of the first node, the first counter updated based on K2 reaches a first integer, and the first integer is configurable.

In an embodiment, the first target power value is related to a first power offset, and the first power offset is related to K2.

In an embodiment, the K1 time-frequency resources are associated with a first downlink RS resource, the K2 time-frequency resources are associated with a second downlink RS resource, and the first downlink RS resource is different from the second downlink RS resource.

In an embodiment, the first receiver 1201 is configured to receive first signaling, the first signaling indicating the first step.

In an embodiment, the first receiver 1201 is configured to receive first signaling, the first signaling indicating a candidate step, where the first step is related to the candidate step, and the first step is related to at least one of K1 or K2.

In an embodiment, the first transmitter 1202 is configured to update a second counter based on K1 after sending the at least two preambles on the K1 time-frequency resources, where the second counter is used for counting a quantity of times of sending a preamble.

In an embodiment, the K1 time-frequency resources are associated with at least one downlink RS resource, the K2 time-frequency resources are associated with at least one downlink RS resource, and the behavior of updating the first counter based on K1 includes: updating the first counter based on a quantity of same downlink RS resources in the at least one downlink RS resource associated with the K1 time-frequency resources and the at least one downlink RS resource associated with the K2 time-frequency resources.

In an embodiment, the first receiver 1201 includes the antenna 452, the receiver 454, the multi-antenna receiving processor 458, the receiving processor 456, the controller/processor 459, the memory 460, and the data source 467 in FIG. 4 of this application.

In an embodiment, the first receiver 1201 includes the antenna 452, the receiver 454, the multi-antenna receiving processor 458, and the receiving processor 456 in FIG. 4 of this application.

In an embodiment, the first receiver 1201 includes the antenna 452, the receiver 454, and the receiving processor 456 in FIG. 4 of this application.

In an embodiment, the first transmitter 1202 includes the antenna 452, the transmitter 454, the multi-antenna transmitting processor 457, the transmitting processor 468, the controller/processor 459, the memory 460, and the data source 467 in FIG. 4 of this application.

In an embodiment, the first transmitter 1202 includes the antenna 452, the transmitter 454, the multi-antenna transmitting processor 457, and the transmitting processor 468 in FIG. 4 of this application.

In an embodiment, the first transmitter 1202 includes the antenna 452, the transmitter 454, and the transmitting processor 468 in FIG. 4 of this application.

### Embodiment 13

Embodiment 13 exemplarily shows a block diagram of a structure of a processing apparatus used in a second node according to an embodiment of this application, as shown in FIG. 13. In FIG. 13, the processing apparatus 1300 in the second node includes a second transmitter 1301 and a second receiver 1302.

The second receiver 1302 is configured to receive a preamble sent on K1 time-frequency resources, or receive a preamble sent on K2 time-frequency resources;
In Embodiment 13, a first counter is updated based on K1, K1 is a positive integer greater than 1, K2 is a positive integer, at least two preambles are sent on the K1 time-frequency resources, the preamble is sent on the K2 time-frequency resources by using a first target power value, at least two of the K1 time-frequency resources do not overlap in time domain, at least two of the K2 time-frequency resources do not overlap in time domain, the K2 time-frequency resources are after the K1 time-frequency resources, the preambles sent on the K1 time-frequency resources and the preamble sent on the K2 time-frequency resources belong to a first random access procedure, the first counter is not updated within a time interval between transmissions of any two of the at least two preambles on the K1 time-frequency resources, and the first target power value is related to a product of the first counter and a first step.

In an embodiment, the phrase that the first counter is updated based on K1 includes: the first counter is updated based on a quantity of preambles sent on the K1 time-frequency resources.

In an embodiment, the second receiver 1302 is configured to receive a preambles sent on K3 time-frequency resources, where the first counter is updated after the preamble is sent on the K2 time-frequency resources, the preamble is sent on the K3 time-frequency resources by using a second target power value, at least two of the K3 time-frequency resources do not overlap in time domain, the K3 time-frequency resources are after the K2 time-frequency resources, the second target power value is a maximum output power of a transmitter of the at least two preambles, the first counter updated based on K2 reaches a first integer, and the first integer is configurable.

In an embodiment, the first target power value is related to a first power offset, and the first power offset is related to K2.

In an embodiment, the K1 time-frequency resources are associated with a first downlink RS resource, the K2 time-frequency resources are associated with a second downlink RS resource, and the first downlink RS resource is different from the second downlink RS resource.

In an embodiment, the second transmitter 1301 is configured to send first signaling, the first signaling indicating the first step.

In an embodiment, the second transmitter 1301 is configured to send first signaling, the first signaling indicating a candidate step, where the first step is related to the candidate step, and the first step is related to at least one of K1 or K2.

In an embodiment, a second counter is updated based on K1 after the at least two preambles are sent on the K1 time-frequency resources, and the second counter is used for counting a quantity of times of sending a preamble.

In an embodiment, the second transmitter 1301 includes the antenna 420, the transmitter 418, the multi-antenna transmitting processor 471, the transmitting processor 416, the controller/processor 475, and the memory 476 in FIG. 4 of this application.

In an embodiment, the second transmitter 1301 includes the antenna 420, the transmitter 418, the multi-antenna transmitting processor 471, and the transmitting processor 416 in FIG. 4 of this application.

In an embodiment, the second transmitter 1301 includes the antenna 420, the transmitter 418, and the transmitting processor 416 in FIG. 4 of this application.

In an embodiment, the second receiver 1302 includes the antenna 420, the receiver 418, the multi-antenna receiving processor 472, the receiving processor 470, the controller/processor 475, and the memory 476 in FIG. 4 of this application.

In an embodiment, the second receiver 1302 includes the antenna 420, the receiver 418, the multi-antenna receiving processor 472, and the receiving processor 470 in FIG. 4 of this application.

In an embodiment, the second receiver 1302 includes the antenna 420, the receiver 418, and the receiving processor 470 in FIG. 4 of this application.

A person of ordinary skill in the art can understand that all or some of the steps in the foregoing methods may be completed by a program instructing related hardware. The program may be stored in a computer-readable storage medium, for example, a read-only memory, a magnetic disk, or a compact disc. Optionally, all or some of the steps in the foregoing embodiments may alternatively be implemented by one or more integrated circuits. Correspondingly, the modules or the units in the foregoing embodiments may be implemented in a form of hardware, or may be implemented in a form of a software functional module. This application is not limited to any specific form of combination of software and hardware. The user equipment, the terminal, and the UE in this application include but are not limited to wireless communication devices such as an uncrewed aerial vehicle, a communication module on an uncrewed aerial vehicle, a remote control aircraft, an aircraft, a small aircraft, a mobile phone, a tablet computer, a notebook computer, an in-vehicle communication device, a wireless sensor, a network card, an IoT terminal, an RFID terminal, an NB-IOT terminal, a machine type communication (MTC) terminal, an enhanced MTC (eMTC) terminal, a data card, an in-vehicle communication device, a low-cost mobile phone, and a low-cost tablet computer. The base station or system device in this application includes but is not limited to wireless communication devices such as a macrocellular base station, a microcellular base station, a home base station, a relay base station, a gNB (NR NodeB) NR NodeB, and a transmitter receiver point (TRP).

The foregoing descriptions are merely exemplary embodiments of this application and are not intended to limit the protection scope of this application. Any modification, equivalent replacement, or improvement made without departing from the spirit and principle of this application shall fall within the protection scope of this application.

## Claims

1. A first node used in wireless communication, comprising:
a first transmitter, configured to: send at least two preambles on K1 time-frequency resources, K1 being a positive integer greater than 1; update a first counter based on K1; and send a preamble on K2 time-frequency resources by using a first target power value, K2 being a positive integer;
wherein any two of the K1 time-frequency resources do not overlap in time domain, any two of the K2 time-frequency resources do not overlap in time domain, the K2 time-frequency resources are after the K1 time-frequency resources, the preambles sent on the K1 time-frequency resources and the preamble sent on the K2 time-frequency resources belong to a first random access procedure, the first counter is not updated within a time interval between transmissions of any two of the at least two preambles on the K1 time-frequency resources, and the first target power value is related to a product of the first counter and a first step.

2. The first node according to claim 1, wherein the behavior of updating the first counter based on K1 comprises: updating the first counter based on a quantity of preambles sent on the K1 time-frequency resources.

3. The first node according to claim 1 or 2, comprising:
the first transmitter, configured to: update the first counter after the preamble is sent on the K2 time-frequency resources; and send a preamble on K3 time-frequency resources by using a second target power value;
wherein any two of the K3 time-frequency resources do not overlap in time domain, the K3 time-frequency resources are after the K2 time-frequency resources, the second target power value is a maximum output power of the first node, the first counter updated based on K2 reaches a first integer, and the first integer is configurable.

4. The first node according to any one of claims 1 to 3, wherein the first target power value is related to a first power offset, and the first power offset is related to K2.

5. The first node according to any one of claims 1 to 4, wherein the K1 time-frequency resources are associated with a first downlink RS resource, the K2 time-frequency resources are associated with a second downlink RS resource, and the first downlink RS resource is different from the second downlink RS resource.

6. The first node according to any one of claims 1 to 5, comprising:
a first receiver, configured to receive first signaling, the first signaling indicating the first step.

7. The first node according to any one of claims 1 to 5, comprising:
a first receiver, configured to receive first signaling, the first signaling indicating a candidate step;
wherein the first step is related to the candidate step, and the first step is related to at least one of K1 or K2.

8. The first node according to any one of claims 1 to 7, comprising:
the first transmitter, configured to update a second counter based on K1 after sending the at least two preambles on the K1 time-frequency resources;
wherein the second counter is used for counting a quantity of times of sending a preamble.

9. A second node used in wireless communication, comprising:
a second receiver, configured to receive a preamble sent on K1 time-frequency resources, or receive a preamble sent on K2 time-frequency resources;
wherein a first counter is updated based on K1, K1 is a positive integer greater than 1, K2 is a positive integer, at least two preambles are sent on the K1 time-frequency resources, the preamble is sent on the K2 time-frequency resources by using a first target power value, any two of the K1 time-frequency resources do not overlap in time domain, any two of the K2 time-frequency resources do not overlap in time domain, the K2 time-frequency resources are after the K1 time-frequency resources, the preambles sent on the K1 time-frequency resources and the preamble sent on the K2 time-frequency resources belong to a first random access procedure, the first counter is not updated within a time interval between transmissions of any two of the at least two preambles on the K1 time-frequency resources, and the first target power value is related to a product of the first counter and a first step.

10. A method for a first node used in wireless communication, comprising:
sending at least two preambles on K1 time-frequency resources, K1 being a positive integer greater than 1; updating a first counter based on K1; and sending a preamble on K2 time-frequency resources by using a first target power value, K2 being a positive integer;
wherein any two of the K1 time-frequency resources do not overlap in time domain, any two of the K2 time-frequency resources do not overlap in time domain, the K2 time-frequency resources are after the K1 time-frequency resources, the preambles sent on the K1 time-frequency resources and the preamble sent on the K2 time-frequency resources belong to a first random access procedure, the first counter is not updated within a time interval between transmissions of any two of the at least two preambles on the K1 time-frequency resources, and the first target power value is related to a product of the first counter and a first step.

11. A method for a second node used in wireless communication, comprising:
receiving a preamble sent on K1 time-frequency resources, or receiving a preamble sent on K2 time-frequency resources;
wherein a first counter is updated based on K1, K1 is a positive integer greater than 1, K2 is a positive integer, at least two preambles are sent on the K1 time-frequency resources, the preamble is sent on the K2 time-frequency resources by using a first target power value, any two of the K1 time-frequency resources do not overlap in time domain, any two of the K2 time-frequency resources do not overlap in time domain, the K2 time-frequency resources are after the K1 time-frequency resources, the preambles sent on the K1 time-frequency resources and the preamble sent on the K2 time-frequency resources belong to a first random access procedure, the first counter is not updated within a time interval between transmissions of any two of the at least two preambles on the K1 time-frequency resources, and the first target power value is related to a product of the first counter and a first step.
